(19) Europäisches Patentamt
European Patent Office
Office européen des brevets

(11) EP 1 422 630 A2

(12) EUROPEAN PATENT APPLICATION

(43) Date of publication:
26.05.2004 Bulletin 2004/22

(51) Int Cl.$^7$: G06F 17/14

(21) Application number: 03257267.9

(22) Date of filing: 18.11.2003

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 20.11.2002 KR 2002072388

(71) Applicant: SAMSUNG ELECTRONICS CO., LTD.
Suwon-City, Kyungki-do (KR)

(72) Inventors:
- Cha, Sang-chang
Youngtong-dong Paldal-gu Gyeonggi-do (KR)
- Ahn, Jong-hak
Youngtong-dong Paldal-gu Gyeonggi-do (KR)

(74) Representative: Robinson, Ian Michael
Appleyard Lees,
15 Clare Road
Halifax HX1 2HY (GB)

# (54) Method and apparatus for performing inverse discrete cosine transform

(57) A method and apparatus for fast inverse discrete cosine transform (IDCT) are provided. The fast IDCT method includes: (a) searching all elements of a discrete cosine transform (DCT) matrix in a predetermined order for non-zero elements; and (b) calculating the restored value of each element of a restoration matrix, by 2 dimensional-inverse DCT (2D-IDCT) transforming the non-zero elements of the DCT matrix by using the symmetry of an IDCT formula. According to the method and apparatus, unnecessary computation for 0's that are the majority of elements in a DCT matrix can be reduced to the minimum in performing the IDCT transform. In addition, even when the number of elements having effective values is large in a DCT matrix, the amount of computation is greatly reduced by using the symmetry of a DCT formula such that the method shows an excellent performance when statistically compared to the conventional fast DCT algorithms.

FIG. 14

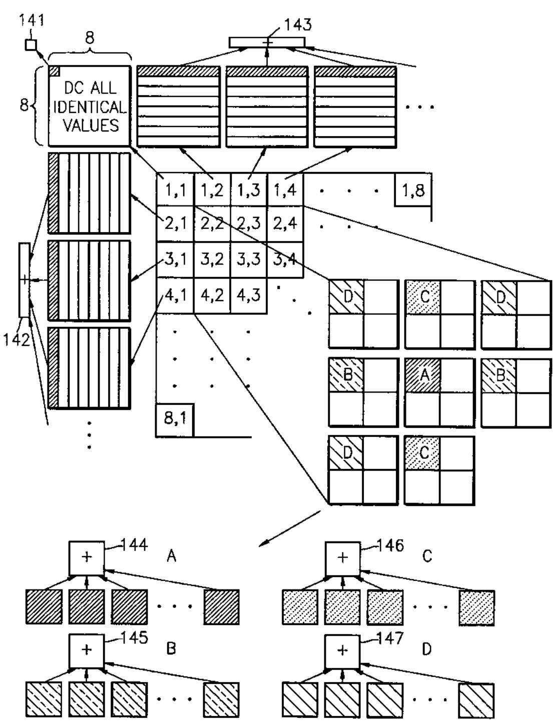


EP 1 422 630 A2

## Description

The present invention relates to a method and apparatus for performing a fast discrete cosine transform (DCT).

Digital-type data compression, in particular, the compression of a video signal is an essential element of a variety of multimedia application environments. However, since a video signal contains a vast amount of information that must be processed, there are a lot of restrictions in efficiently transmitting, storing, or processing data. In order to solve these restrictions, international standards such as moving picture experts group (MPEG)-2, MPEG-4, H.263, H. 26L, etc. define compression stream syntaxes and decoding processes.

Compression methods can be broken down into lossless compression methods and lossy compression methods. If lossless compression is used for characters, diagrams, and ordinary data, complete reconstruction is possible, but the compression ratio is 2 to 1 on average. Meanwhile, if data such as video, voice, and sound are compressed by allowing a small amount of loss that cannot easily be perceived by human eyes and ears, a 10 to 1 or higher compression ratio can be easily obtained. A transform encoding technique is one of the most widely used lossy encoding techniques for efficiently compressing video data. In a basic frame of this method, data which are arranged with high spatial correlation are transformed into frequency components, ranging from low frequency components to high frequency components. Quantization is performed for each frequency component. Special correlation between each frequency component almost disappears and the energy of the signal is concentrated on the low frequency part. Among the frequency domain data, which is obtained by orthogonal transformation, more bits are allocated for a frequency component in which more energy is concentrated (i.e., where a distribution value is higher) such that the frequency component can be expressed solidly. Whenever a distribution value increases by four times (i.e., whenever the amplitude is doubled), one more bit is allocated to the frequency component having the distribution value such that all frequency components have identical quantization error characteristics. Among a variety of orthogonal transforms, the Karhunen-Loeve transform (KLT) has the highest energy concentration characteristic and theoretically provides the most efficient compression. However, since a transform function should be newly defined for different pictures in this method, the KLT transform cannot be practically used. A method which has a performance near to that of the KLT and can be used practically is a discrete cosine transform (DCT). In the DCT transform, which is at the heart of a number of international standards, a plurality of 8 x 8 picture elements are grouped in a block and a transform is performed in units of blocks. The compression ratio increases with respect to the size of a block, but the implementation of the transform becomes difficult as the size of the block increases. Based on experimentation, the 8 x 8 picture element size has been selected as a compromise between performance and ease of implementation.

Generally in the prior art compression techniques, in order to remove spatial redundancy when pictures are compressed, DCT transformation is used. In order to remove temporal redundancy, motion estimation (ME) and motion compensation (MC) are used.

Figure 1 is a diagram showing the direction of the prior art 2-dimension (2D)-inverse discrete cosine transform (IDCT).

In one of the prior art techniques for performing fast IDCT by reducing the amount of computation in the IDCT process, 1D-IDCT is performed in the horizontal direction and vertical direction, respectively, as shown in Figure 1. This is referred to as 2D-IDCT. In particular, Figure 1 shows a 2D-IDCT transform adopting a row column algorithm (RCA) using N horizontal IDCTs, substitutions, and N vertical IDCTs. That is, 1D IDCT is performed in the row direction, the resulting values are substituted in order to compute columns, and then 1D-IDCT is performed in the column direction.

Figure 2 is a table comparing the amounts of computations performed in the prior art IDCT algorithms.

IDCT algorithms for implementing the 2D-IDCT of Figure 1 include the Chen algorithm and the Wang algorithm, both based on sparse matrix factorization, and the Lee algorithm and the AAN algorithm, both based on discrete Fourier transformation. Figure 2 shows the number of multiplications and additions required in performing these algorithms.

Figure 3 is a diagram showing the Wang algorithm, a conventional fast IDCT algorithm. Based on input signals x(0) through x(7), output signals X(0) through X(7) are output. In this process, the computation results of previous contact points should be transferred to each contact point. Constants C0 through C7 are located between the contact points. Each constant is a value by which a previous contact point should be multiplied when a next contact point is computed. For example, C0 can be computed as C0 = x(1) + x(7). If all computations are performed in this manner, it can be found that 16 multipliers and 26 adders are required. Though there may be slight differences in the various ways of emboding such a process, most fast algorithms adopt similar structures.

Conventional fast IDCT algorithms can substantially reduce the complexity of IDCT computations. However, in the restoration when decompression is performed, the IDCT process requires the largest amount of computations. In the current mobile communications environment providing a variety of multimedia services, there are no great restrictions on the size and power consumption on encoders, which are located in server systems of services providers. Meanwhile, decoders have restrictions on the size and power consumption because they are generally located in mobile communications devices such as mobile phones and personal digital assistants (PDAs). Accordingly, the amount of IDCT computation performed in the decoders should be reduced.

According to the present invention there is provided an apparatus and method as set forth in the appended claims. Preferred features of the invention will be apparent from the dependent claims, and the description which follows.

The present invention provides an apparatus and method by which the amount of computation in the IDCT process can be greatly reduced by performing 2D-IDCT for each element in a DCT matrix by using the symmetry of an IDCT formula.

According to an aspect of the present invention, there is provided a fast inverse discrete cosine transform method comprising: (a) searching all elements of a discrete cosine transform (DCT) matrix in a predetermined order for elements that are not zero (0) and (b) calculating the restored value of each element of a restoration matrix by 2 dimensional-inverse DCT (2D-IDCT) transforming the non-zero elements of the DCT matrix by using the symmetry of an IDCT formula.

According to another aspect of the present invention, there is provided a fast inverse discrete cosine transform (IDCT) apparatus comprising: an element search unit which searches all elements of a discrete cosine transform (DCT) matrix in a predetermined order for elements that are not zero (0); and an individual element 2 dimensional (2D)-IDCT unit which calculates the restored value of each element of a restoration matrix, by 2D-IDCT transforming the non-zero elements of the DCT matrix found by the element search unit, by using the symmetry of an IDCT formula.

For a better understanding of the invention, and to show how embodiments of the same may be carried into effect, reference will now be made, by way of example, to the accompanying diagrammatic drawings in which:

Figure 1 is a diagram showing the direction of a conventional 2 dimensional (D)-inverse discrete cosine transform (IDCT);

Figure 2 is a table comparing the amounts of computations performed in the prior art IDCT algorithms;

Figure 3 is a diagram showing the Wang algorithm, a conventional fast IDCT algorithm;

Figure 4 is a diagram showing the distribution of element values of DCT matrices for different quantization parameters;

Figure 5 is a graph showing the probabilities of presence of various non-zero element values in the DCT matrices for different quantization parameters;

Figure 6 is a diagram of the structure of a fast IDCT apparatus according to the present invention;

Figure 7 is a diagram showing an example of an ordinary 8 x 8 DCT matrix;

Figure 8 is a table showing the values of cosine factors included in an IDCT formula;

Figure 9 is a grid showing the number of multiplications with respect to the location of each element of a DCT matrix needed to perform IDCT transformation;

Figure 10 is a detailed diagram of the structure of a reference value. computation storage unit of Figure 6;

Figure 11 is a diagram showing the symmetry of a restoration matrix obtained by IDCT transforming a DCT matrix;

Figure 12 is a table showing various types of symmetry with respect to the locations of elements of a DCT matrix;

Figure 13 is a detailed diagram of the structure of a reference value iterative addition unit of Figure 6;

Figure 14 is a diagram used for explaining a variety of addition methods used by the reference value iterative addition unit of Figure 6;

Figure 15 is a diagram used for explaining the entire process of DCT transforming respective elements;

Figure 16 is a graph showing the result of experiments on the number of multiplications with respect to quantization parameters;

Figure 17 is a graph showing the result of experiments on the number of additions with respect to quantization parameters;.

Figure 18 is a flowchart of the steps performed by a fast DCT method according to the present invention;

Figure 19 is a detailed flowchart of the sub-steps performed in a step for 2D-DCT transforming each element in Figure 18;

Figure 20 is a detailed flowchart of the sub-steps performed in a step for calculating and storing reference values in Figure 19; and

Figure 21 is a detailed flowchart of the sub-steps performed in a step for iteratively adding reference values according to the type of symmetry.

Figure 4 shows the distributions of "DCT coefficients" in DCT matrices that appear when MPEG4 streams obtained by encoding MPEG4 test moving pictures (Akiyo, Foreman, and Mobile) using different quantization parameters (Qp) are decoded before an IDCT step. Here, the smaller the Qp, the lower the compression ratio, and encoding is performed at a higher transmission rate. It is shown that about 30% of the element values in the DCT matrices are distributed concentrating on a certain area (2x2, 4x4) of a DCT matrix. This is because, in an ordinary distribution of DCT matrix element values, the values are concentrated at a low frequency band. However, the smaller the Qp, i.e., the better the picture quality, the wider the distribution of the DCT matrix element values from the low frequency band to the high frequency band.

Figure 5 is a graph showing probabilities of the presence of various numbers of non-zero element values in DCT matrices obtained by using different quantization parameters.

Figure 5 is used to analyze probabilities of the presence of various numbers of non-zero element values in the DCT matrices from the same inputs as those of Figure 4. The analysis is performed with respect to the Qp. As can be seen in Figure 5, the probability is about 90% that when an encoded MPEG4 stream is decoded, the number of effective, non-zero element values in a DCT matrix is 10 or less. Compared with Figure 4, this indicates that the probability is high that even when the end of block (EOB, the number of coefficients to be computed in a block) value of DCT matrix element values is large, 0's are included in this case.

Accordingly, regardless of the locations of DCT matrix element values in a block, when the number of element values is 10 or less, an algorithm to reduce the computation is needed. However, the locations of coefficients are not regular and the prior art fast algorithms are not optimized to this characteristic.

Figure 6 is a diagram of the structure of a fast IDCT apparatus according to the present invention.

The fast IDCT apparatus comprises an element search unit 61 and an individual element 2D-IDCT unit 62.

In an ordinary process for compressing video data, a DCT transform is first performed in which a time domain video signal is divided into some frequency domains where signal powers range from high frequencies to low frequencies. Since the power of the video signal is concentrated at the low frequency band, if quantization is performed after allocating bits appropriately, data can be compressed with a smaller total number of bits. Then, quantization is performed to reduce the total amount of data. In the quantization, the frequencies are divided into quantized values, and smaller values are made to be 0 such that the entire amount of data is reduced. However, due to the values which become 0 and disappear, some information is lost. Then, run-length encoding, a kind of compression algorithm which replaces sequences ("runs") of repeated characters (here, 0's) with a single character and the length of the run, is performed. The longer and more frequent the runs are, the higher the compression ratio that will be achieved. Next, Huffman coding, by which an integer string generated by zigzag scanning is transformed into a binary number, is performed. After the steps described above, the 8 x 8 matrix is reduced to a combination of 0's and 1's. In order to decompress this compressed video data, the compression process described above is performed reversely.

As described above, if video data is DCT transformed and then quantized, most of the compressed information is concentrated at the low frequency band, and the high frequency band becomes almost 0. The bigger the quantization scale, the more frequently the values become 0, and, accordingly, in the DCT matrix the number of non-zero element values decreases. The smaller the quantization scale, the greater the number of non-zero elements. In general, most of the element values of a DCT matrix of a moving picture are "0's" and only some of the element values have effective values. Accordingly, if IDCT transformation is performed only on elements having effective values, the amount of computation can be reduced. In addition, when only the elements having effective values are IDCT transformed, if the symmetry of the IDCT formula is used, the amount of computation can be further reduced. That is, the element search unit 61 searches through elements of the DCT matrix in a predetermined order for non-zero element values. The individual element 2D-IDCT unit 62 IDCT transforms the non-zero elements found by the element search unit 61, by using the symmetry of the IDCT formula, so that the restored value of each element of the restoration matrix is calculated.

Generally, a 2-D IDCT transform uses equation 1 below:

$$V(x,y)=\sum_{i=0}^{N-1}\sum_{j=0}^{N-1}C(i,j)T(i,j)\cos(\frac{(2x+1)i\pi}{2N})\cos(\frac{(2y+1)j\pi}{2N}).....(1)$$

Here, if $i \neq 0$ and $j \neq 0$ , then C(i,j) = 2/N, and if i=0 or j=0, then C(i,j) = 1/N.

In equation 1, T(i, j) indicates the value of an element at coordinates i+1, j+1 of DCT matrix T, and V(x, y) indicates the value of an element at coordinates x+1, y+1 of matrix V which is IDCT transformed and restored from the DCT matrix. If the DCT matrix T is an 8x8 matrix, which is a generally used size, each of i, j, x, and y has a value from 0 to 7 and N is 8.

A superposition principle is used in order to process only non-zero elements in a DCT matrix. That is, according to the superposition principle, a block of element values of the DCT matrix is divided into parts or individual elements, IDCT transformation is performed on each unit, and then the results are summed up such that the sum is the same as the result of the IDCT transform of the entire matrix. In the present invention, block values of element values of a DCT matrix are searched for individually, and only parts having effective values are IDCT transformed. Then, the results are finally summed up so that a restoration matrix is obtained. In order to 2D-IDCT transform respective elements, each non-zero element in the DCT matrix is computed by the following equation 2:

```
IDCT(T) = IDCT(T(0, 0)) + IDCT(T(0, 1)) + IDCT(T(0, 2)) + … + IDCT(T(0, 7))
      + IDCT(T(1, 0)) + IDCT(T(1, 1)) + IDCT(T(1, 2)) + … + IDCT(T(1, 7))
      + IDCT(T(2, 0)) + IDCT(T(2, 1)) + IDCT(T(2, 2)) + … + IDCT(T(2, 7))
      + … +
      + IDCT(T(7, 0)) + IDCT(T(7, 1)) + IDCT(T(7, 2)) + … + IDCT(T(7, 7))
                                                              ..........(2)
```

Here, IDCT(T) indicates restored 8 x 8 matrix V which is obtained by IDCT transforming an 8 x 8 DCT matrix T. IDCT(T(0, 0)) is an 8 x 8 matrix, in which when T(0, 0), i.e., the element value of the first row and first column of the DCT matrix, and the coordinate values i=0, j=0 are substituted in equation 1, and then, respective coordinate values x=0-7, y=0-7 of the restoration matrix V are substituted, the resulting values are element values of coordinates x, y. IDCT(T(0, 0)) is a partial value of the restored 8 x 8 matrix V. That is, if, for all non-zero elements in the DCT matrix T, matrices that are partial values of the restoration matrix V are all obtained and summed up, then the value of the desired restoration matrix can be obtained. When the present invention is actually implemented, a matrix that is a partial value of the restoration matrix V is stored in the form of a table in memory, and then values located at memory addresses corresponding to all stored tables are summed up such that the restore matrix value is obtained.

If the number of non-zero elements in a DCT matrix is 10 in a DCT transform, an individual element 2D-IDCT transform is performed based on equation 3 below:

```
IDCT(T) = IDCT(T(0, 0)) + IDCT(T(0, 1)) + IDCT(T(0, 2)) + IDCT(T(0, 3))
   + IDCT(T(1, 0)) + IDCT(T(1, 1)) + IDCT(T(1, 2))
   + IDCT(T(2, 0)) + IDCT(T(2, 1))
   + IDCT(T(3, 0))                                          ..........(3)
```

The individual element 2D-IDCT unit 62 includes a reference value computation storage unit 621 and a reference value iterative addition unit 622.

In the IDCT transform formula, that is, in equation 1, in which a value T(i, j) of a non-zero element that is found by the element search unit 61 is substituted, the reference value computation storage unit 621 substitutes coordinates i, j of the non-zero element and coordinate values x, y of reference values determined by the symmetry of the IDCT formula. By doing so, reference values of respective elements of the restoration matrix for the non-zero elements are computed and stored. Due to the periodicity of the cosine included in the IDCT formula in equation 1, the IDCT formula has symmetry. Accordingly, if the value T(i, j) of the non-zero element and its coordinate values i, j are substituted in the IDCT formula, and coordinate values x=0-7, y=0-7 of all elements of the restoration matrix are substituted, symmetrical partial values are obtained. If this symmetry is used, the amount of computation required in the IDCT can be greatly reduced. In the present invention, an element having the symmetrical partial value in the stored matrix is determined to be a reference element and only the partial value of the reference element is obtained. Then, by rotating the partial value of the reference value to the left or right, rotating up and down, or inverting the sign, partial values of the other elements are obtained. Here, the partial value of the reference element is referred to the reference value of the reference element.

The reference value iterative addition unit 622 computes the restored value of each element of the restoration matrix, by iteratively adding the reference values stored in the reference value computation storage unit 621 to the value of each element of the restoration matrix according to the type of symmetry with respect to coordinates of the reference element. As described above, if for all non-zero elements in the DCT matrix, matrices that are partial values of the restoration matrix are all obtained and then summed up, the value of the desired restoration matrix can be obtained by the superposition principle. Accordingly, if reference values that are the partial values of reference elements are obtained for all non-zero elements in the DCT matrix and then summed up, the IDCT value of the reference value can be obtained. By rotating the partial value of each reference value to the left or right, up and down, or inverting the sign, and then summing up, IDCT values of elements other than the reference elements can be obtained. That is, not necessarily all elements of the matrices which are partial values of the restoration matrix are obtained.

Figure 7 is a diagram showing an example of an ordinary 8 x 8 DCT matrix.

The more video information contained in an element, the darker the shading used to represent the element. An element A1 in which the most video information is contained, that is, an element in the lowest frequency band, is represented with the darkest shading. The value of A1 is referred to as a DC (low frequency) value and the values of the remaining 63 elements are referred to as AC (high frequency) values. The DC value and neighboring element values, that is, elements in the top left corner of the matrix, contain very important information determining the brightness of the entire picture.

The element search unit 61 may search for non-zero elements in the DCT matrix, in the horizontal direction or in the vertical direction. However, since non-zero elements are concentrated on the top left corner of the matrix, the non-zero elements are searched for in a zigzag order from the element A1. That is, by searching for elements in order of A1, A2, A3, ..., the most non-zero elements can be searched for with the least amount of processing.

Figure 8 is a table showing the values of cosine factors included in an IDCT formula.

For an 8 x 8 DCT matrix, if T(i, j), i.e., the value of an element of the DCT matrix, is excluded in equation 1, which is the IDCT formula, the formula can be simplified to equation 4 below:

$$sign \ x \ C \ x \cos(\frac{k\pi}{16}) \ x \cos(\frac{p\pi}{16}) \qquad (4)$$

Here, k=(2x+1)i, p=(2y+1)j, and C=C(i, j).

If the resulting value of the equation is multiplied by the value of an element of the DCT matrix, it becomes a partial value. Accordingly, the resulting value of equation 3 may be referred to as a normalized value. Figure 8 is a cosine factor value table in which factor values k, p of the cosine function included in equation 3 are determined according to the coordinates m, n of an element of the 8 x 8 DCT matrix. Here, m, n are actual coordinate values of an element in the 8 x 8 DCT matrix and therefore are greater than the coordinate values of an element, which is substituted in equation 1, by 1. That is, i = m-1, j=n-1.

For example, if the coordinates of element values of a DCT matrix are m=6, n=4 (that is, i=5, j=3), 16 constants (4x4 =16) should be generated as products of combinations of cos $(\frac{5\pi}{16})$, - cos $(\frac{1\pi}{16})$, cos $(\frac{7\pi}{16})$, cos $(\frac{3\pi}{16})$ and cos $(\frac{3\pi}{16})$, -cos$(\frac{7\pi}{16})$, -cos$(\frac{1\pi}{16})$, -cos$(\frac{5\pi}{16})$. However, since there are overlapping values, the overlapping values should be excluded. Here, the number of overlapping values is ${}_pC_2$. The p denotes the number of cosine factor values according to row coordinate values and cosine factor values according to column coordinate values having identical values in the table of Figure 8. In the above case where i=6 and j=4, p=1, 3, 5, 7. Accordingly, excluding the overlapping ${}_4C_2$ values, i.e., 6 overlapping values, 10 constants are generated. For all elements of the DCT matrix, the following description can be applied.

First, if both the row and column of the DCT matrix are even numbers, k=1, 3, 5, 7 and p=1, 3, 5, 7, then 16 (=4x4) constants should be generated. But, if excluding the overlapping ${}_4C_2$ values, i.e., 6 overlapping values, a total of 10 constants are generated.

Secondly, if both the row and column of the DCT matrix are odd numbers, k=2, 6 and p=2, 6, then 4 (=2x2) constants should be generated. But, if excluding the overlapping ${}_2C_2$ values, i.e., 1 overlapping value, a total of 3 constants are generated.

Thirdly, in the other cases, where there is no overlapping, 8 (=4x2), 4 (=4x1), 2 (=2x1), and 1 (=1x1) constants are generated, respectively.

Figure 9 is a diagram showing the number of multiplications with respect to the locations of elements of a DCT matrix needed by IDCT transformation.

As shown in Figure 8, if constants are generated excluding overlapping values, the same number of constants as shown in Figure 9 is needed according to the location of the value of an element of the DCT matrix. As described above, since the constant is a DCT value obtained by normalizing the value of an element of the DCT matrix, if the constant is multiplied by the value of each element of the DCT matrix, the IDCT value of the element of the DCT matrix can be obtained. Accordingly, the number of multiplications needed to compute the IDCT value of each element of the DCT matrix is as in Figure 9.

Figure 10 is a detailed diagram of the structure of the reference value computation storage unit of Figure 6.

The reference value computation storage unit 621 of Figure 6 comprises a first reference value computation storage unit 101, a second reference value column computation storage unit 102, a third reference value row computation storage unit 103, a fourth reference value matrix computation storage unit 104, a fifth reference value matrix computation storage unit 105, a sixth reference value matrix computation storage unit 106, and a seventh reference value matrix computation storage unit 107.

If the coordinate values of a non-zero element are the first row and first column, that is, i=0, j=0, the first reference value computation storage unit 101 inputs the coordinate values (x=0, y=0) of a reference element determined to be the element of the first row and first column, in the IDCT formula of equation 1, and, by doing so, computes and stores the first reference value.

If the coordinate values of a non-zero element are an arbitrary row and the first column, excluding the first row and first column, that is, (i=1, j=0), (i=2, j=0), ..., (i=5, j=0), or (i=7, j=0), the second reference value column computation storage unit 102 inputs the coordinate values, that is, (x=0, y=0), ..., (x=6, y=0), and (x=7, y=0), of reference elements determined to be the elements of the arbitrary row and first column, in the IDCT formula of equation 1, and, by doing so, computes and stores the second reference value column.

If the coordinate values of a non-zero element are the first row and an arbitrary column, excluding the first row and first column, that is, (i=0, j=1), (i=0, j=2), ..., (i=0, j=6), or (i=0, j=7), the third reference value row computation storage unit 103 inputs the coordinate values, that is, (x=0, y=0), (x=0, y=1), ..., (x=6, y=0), and (x=7, y=0), of reference elements determined to be the elements of the first row and arbitrary column, in the IDCT formula of equation 1, and, by doing so, computes and stores the third reference value row.

If the coordinate values of a non-zero element are one of the coordinate values of elements having A-type symmetry, that is, (i=2, j=2), etc., the fourth reference value matrix computation storage unit 104 inputs the coordinate values, that is, (x=0, y=0), (x=0, y=1), (x=0, y=2), (x=0, y=3), (x=1, y=0), (x=1, y=1), (x=1, y=2), (x=1, y=3), (x=2, y=0), (x=2, y=1), (x=2, y=2), (x=2, y=3), (x=3, y=0), (x=3, y=1), (x=3, y=2), (x=3, y=3), of reference elements determined to be the elements of the first quadrant, in the IDCT formula of equation 1, and, by doing so, computes and stores the fourth reference value matrix.

If the coordinate values of a non-zero element are one of the coordinate values of elements having B-type symmetry, that is, (i=2, j=1), etc., the fifth reference value matrix computation storage unit 105 inputs the coordinate values, that is, (x=0, y=0), (x=0, y=1), (x=0, y=2), (x=0, y=3), (x=1, y=0), (x=1, y=1), (x=1, y=2), (x=1, y=3), (x=2, y=0), (x=2, y=1), (x=2, y=2), (x=2, y=3), (x=3, y=0), (x=3, y=1), (x=3, y=2), (x=3, y=3), of reference elements determined to be the elements of the first quadrant, in the IDCT formula of equation 1, and, by doing so, computes and stores the fifth reference value matrix.

If the coordinate values of a non-zero element are one of the coordinate values of elements having C-type symmetry, that is, (i=1, j=2), etc., the sixth reference value matrix computation storage unit 106 inputs the coordinate values, that is, (x=0, y=0), (x=0, y=1), (x=0, y=2), (x=0, y=3), (x=1, y=0), (x=1, y=1), (x=1, y=2), (x=1, y=3), (x=2, y=0), (x=2, y=1), (x=2, y=2), (x=2, y=3), (x=3, y=0), (x=3, y=1), (x=3, y=2), (x=3, y=3), of reference elements determined to be the elements of the first quadrant, in the IDCT formula of equation 1, and, by doing so, computes and stores the sixth reference value matrix.

If the coordinate values of a non-zero element are one of the coordinate values of elements having D-type symmetry, that is, (i=1, j=1), etc., the seventh reference value matrix computation storage unit 105 inputs the coordinate values, that is, (x=0, y=0), (x=0, y=1), (x=0, y=2), (x=0, y=3), (x=1, y=0), (x=1, y=1), (x=1, y=2), (x=1, y=3), (x=2, y=0), (x=2, y=1), (x=2, y=2), (x=2, y=3), (x=3, y=0), (x=3, y=1), (x=3, y=2), (x=3, y=3), of reference elements determined to be the elements of the first quadrant, in the IDCT formula of equation 1, and, by doing so, computes and stores the seventh reference value matrix.

Figure 11 is a diagram showing the symmetry of a restoration matrix obtained by IDCT transforming a DCT matrix.

Due to the periodicity of the cosine included in the DCT formula of equation 1, the IDCT formula has symmetry.

Accordingly, if the DCT matrix is IDCT transformed, the matrices that are partial values of the restoration matrix have symmetrical values as shown (as described above, by the principle of superposition, if matrices that are partial values of the restoration matrix are all obtained and summed up, the result is the complete restoration matrix). It is assumed that all matrices that are partial values of the restoration matrix are divided into four quadrants, and the top left part, the top right part, the bottom left part, and the bottom right part are referred to as the first quadrant, the second quadrant, the third quadrant, and the fourth quadrant, respectively. If a small 4x4 matrix corresponding to the first quadrant is R, as shown in Figure 11, the second quadrant is symmetrical about the vertical line, the fourth quadrant is symmetrical about the horizontal line, and the third quadrant is point symmetrical about the center with R.

Also, with respect to the locations of elements of the restoration matrix, the sign changes of the above quadrants show different patterns, which can be divided into 4 types, that is, type A, type B, type C, and type D. As shown in Figure 11, all quadrants have positive signs in type A, the second and third quadrants have positive signs and the first and fourth quadrants have negative signs in type B, the first and second quadrants have positive signs and the third and fourth quadrants have negative signs in type C, and the first and fourth quadrants have positive signs and the second and third quadrants have negative signs.

Figure 12 is a table showing the types of symmetry with respect to the locations of elements of a DCT matrix.

Figure 12 is a table showing different types of symmetry, that is, types A, B, C, and D, with respect to the locations of elements of an 8x8 DCT matrix. The element at the first row and first column has one DC value. Since the values of elements in the first column, excluding the element at the first row and first column, can be regarded as the DC value in each row, the resulting values obtained by IDCT transforming these values in the horizontal direction are identical. That is, the resulting values obtained by DCT transforming 8 columns are the same. Since the values of elements in the first row, excluding the element at the first row and first column, can be regarded as the DC value in each column, the resulting values obtained by IDCT transforming three values in the vertical direction are identical. That is, the resulting values obtained by DCT transforming 8 rows are the same. The remaining elements have any one of types A through D.

Figure 13 is a detailed diagram of the structure of the reference value iterative addition unit 622 of Figure 6.

The reference value iterative addition unit 622 of Figure 6 comprises a first reference value initialization unit 131, a second reference value column addition unit 132, a third reference value row addition unit 133, a fourth reference value matrix addition unit 134, a fifth reference value matrix addition unit 135, a sixth reference value matrix addition unit 136, and a seventh reference value matrix addition unit 137.

The first reference value initialization unit 131 initializes the value of each element of a restoration matrix with the first reference value stored in the first reference value computation storage unit 101. The second reference value column addition unit 132 adds the second reference value column stored in the second reference value column computation storage unit 102, to elements of each column of the restoration matrix. The third reference value row addition unit 133 adds the third reference value row stored in the third reference value row computation storage unit 103, to elements of each row of the restoration matrix. According to the A-type symmetry, the fourth reference value matrix addition unit 134 adds the fourth reference value matrix stored in the fourth reference value matrix computation storage unit 104 to the elements of the first quadrant of the restoration matrix without change; to the elements of the second quadrant after horizontally reversing the reference value matrix; to the elements of the third quadrant after vertically reversing the reference value matrix; and to the elements of the fourth quadrants after rotating the reference value matrix by 180 degrees. According to the B-type symmetry, the fifth reference value matrix addition unit 135 adds the fifth reference value matrix stored in the fifth reference value matrix computation storage unit 105 to the elements of the first quadrant of the restoration matrix without change; to the elements of the second quadrant after horizontally reversing the reference value matrix and inverting the signs; to the elements of the third quadrant after vertically reversing the reference value matrix; and to the elements of the fourth quadrants after rotating the reference value matrix by 180 degrees and inverting the signs. According to the C-type symmetry, the sixth reference value matrix addition unit 136 adds the sixth reference value matrix stored in the sixth reference value matrix computation storage unit 106 to the elements of the first quadrant of the restoration matrix without change; to the elements of the second quadrant after horizontally reversing the reference value matrix; to the elements of the third quadrant after vertically reversing the reference value matrix and inverting the signs; and to the elements of the fourth quadrants after rotating the reference value matrix by 180 degrees and inverting the signs. According to the D-type symmetry, the seventh reference value matrix addition unit 137 adds the seventh reference value matrix stored in the seventh reference value matrix computation storage unit 107 to the elements of the first quadrant of the restoration matrix without change; to the elements of the second quadrant after horizontally reversing the reference value matrix and inverting the signs; to the elements of the third quadrant after vertically reversing the reference value matrix and inverting the signs; and to the elements of the fourth quadrants after rotating the reference value matrix by 180 degrees.

As shown in Figure 12, among the elements of the restoration matrix obtained by IDCT transforming the DCT matrix, excluding the first row or the first column of the restoration matrix, the symmetry of the elements included in the even-numbered rows alternates between D-type symmetry and C-type symmetry (that is, D, C, D, C, ...), and the symmetry of the elements included in the odd-numbered rows alternates between B-type symmetry and A-type symmetry (that is, B, A, B, A, ...).

Figure 14 is a diagram used for explaining a variety of addition methods used by the reference value iterative addition unit of Figure 6.

As described above, the reference value iterative addition unit 622 performs additions differently with respect to the location of an element of the input DCT matrix. As shown in Figure 12, according to the locations of the elements of the DCT matrix, the matrix is divided into DC, the first column, the first row, A, B, C, and D, and then is processed by the following 3 addition methods.

First, if the location of an element of the DCT matrix is located in the first column or the first row, only a first reference value that is a partial value of one reference element, that is, the DC value, is obtained from the DCT formula, and stored in the first reference value computation storage units 101 of Figure 10 and 141 of Figure 14. The coordinates of a reference element of the restoration matrix are (x=0, y=0), and the storage capacity of the first reference value computation storage unit 101, 141 is 1 (this is a relative size). The first reference value initialization unit 131 of Figure 13 initializes the value of each element of the restoration matrix with the first reference value stored in the first reference value computation storage unit 101, 141. That is, all elements of the restoration matrix are identically recorded with the DC value. Since the coordinate values of the remaining elements, that is, 63 (=64-1) elements, are not necessarily substituted in the DCT formula and computed, the amount of computation is greatly reduced.

Secondly, if the location of an element of the DCT matrix is in the first row or first column (here, the element at the first row and first column which has the DC value described above is excluded), 8 values are obtained from the DCT formula, and stored in the second reference value column computation storage unit 102 of Figure 10 and 142 of Figure 14, or in the third reference value row computation storage unit 103 of Figure 10 and 143 of Figure 14. The storage capacity of the second reference value column computation storage unit 102, 142, or the third reference value row computation storage unit 103, 143 is 8. Here, if an element of the DCT matrix is located in the first column, the values resulting from DCT have an identical value in the horizontal direction, as described above. That is, 8 values from the first column to the eighth column are identical. Accordingly, as shown in the figure, the coordinates of reference elements of the restoration matrix are (x=0, y=0), (x=1, y=1), ..., (x=0, y=7) and the number of the coordinates is 8. Also, if the location of an element of the DCT matrix is in the first row, the values resulting from DCT have an identical value in the vertical direction, as described above. That is, 8 values from the first row to the eighth row are identical. Accordingly, as shown in the figure, the coordinates of reference elements of the restoration matrix are (x=0, y=0), (x=0, y=1), ..., (x=0, y=7) and the number of the coordinates is 8. The second reference value column addition unit 132 of Figure 13 adds the second reference value column stored in the second reference value column computation storage unit 102, 104, to elements of each column of the restoration matrix. For example, if the coordinates of a non-zero element in the DCT matrix are (i=1, j=0), the coordinates of reference elements of the restoration matrix are (x=0, y=0), (x=0, y=1), ..., (x=0, y=7), and therefore the number of the values resulting from DCT is 8 and the values are stored as a column in the second reference value column computation storage unit 102, 104, as shown in the figure. If the values stored as a column are iteratively added 8 times from the first column to the eighth column, the coordinate values of other elements in the horizontal direction, that is, 56 (=64-8) coordinate values, are not necessarily substituted and calculated. Accordingly, the amount of computation is greatly reduced. Likewise, the third reference value addition unit 133 of Figure 13 adds the third reference value row stored in the third reference value row computation storage unit 103, 143, to elements of each row of the restoration matrix. For example, if the coordinates of a non-zero element in the DCT matrix are (i=0, j=1), the coordinates of reference elements of the restoration matrix are (x=0, y=0), (x=1, y=0), ..., (x=7, y=0), and therefore the number of the values resulting from DCT is 8 and the values are stored as a row in the second reference value column computation storage unit 102, 142, as shown in the figure. If the values stored as a column are iteratively added 8 times from the first row to the eighth row, the coordinate values of other elements in the vertical direction, that is, 56 (=64-8) coordinate values do not need to be substituted and calculated. Accordingly, the amount of computation is greatly reduced.

Thirdly, if an element of the DCT matrix is not located in the first row or first column, 16 values are obtained from the DCT formula, and are stored in the fourth reference value matrix computation storage unit 104 (Figure 10), 144 (Figure 14), the fifth reference value matrix computation storage unit 105 (Figure 10), 145 (Figure 14), the sixth reference value matrix computation storage unit 106 (Figure 10), 146 (Figure 14), or the seventh reference value matrix computation storage unit 107 (Figure 10), 147 (Figure 14). The storage capacity of the fourth reference value matrix computation storage unit 104, 144, the fifth reference value matrix computation storage unit 105, 145, the sixth reference value matrix computation storage unit 106, 146, or the seventh reference value matrix computation storage unit 107, 147 is 16. However, unlike the first and second cases where addition is performed in an identical manner, addition is performed by using the symmetry of the four patterns as shown in Figure 14. That is, according to the respective patterns, only 16 values, which is a fourth of the entire results, are stored in the fourth reference value matrix computation storage unit 104, 144, the fifth reference value matrix computation storage unit 105, 145, the sixth reference value matrix computation storage unit 106, 146, or the seventh reference value matrix computation storage unit 107, 147, which are different temporary storage places. Since the reference values stored in this way are added according to their symmetry, the amount of computation decreases to one fourth when all elements are IDCT transformed individually.

If the location of an element in the DCT matrix is included in A of Figure 12, according to the A-type symmetry, the fourth reference value matrix addition unit 134 of Figure 13 adds the fourth reference value matrix, that is, the 16 values, stored in the fourth reference value matrix computation storage unit 104, 144, to the elements of the first quadrant of the restoration matrix without change; to the elements of the second quadrant after horizontally reversing the reference value matrix; to the elements of the third quadrant after vertically reversing the reference value matrix; and to the elements of the fourth quadrant after rotating the reference value matrix by 180 degrees. For example, if the coordinates of a non-zero element in the DCT matrix are (i=2, j=2), the coordinates of the reference elements of the restoration matrix are (x=0, y=0), (x=0, y=1), (x=0, y=2), (x=0, y=3), (x=1, y=0), (x=1, y=1), (x=1, y=2), (x=1, y=3), (x=2, y=0), (x=2, y=1), (x=2, y=2), (x=2, y=3), (x=3, y=0), (x=3, y=1), (x=3, y=2), (x=3, y=3). Accordingly, the number of values resulting from DCT is 16 and the values are stored as a 4x4 matrix in the fourth reference value matrix computation storage unit 104, 144, as shown in the figure. If this matrix is added to the elements of the first quadrant without change, to the elements of the second quadrant after horizontally reversing the reference value matrix, to the elements of the third quadrant after vertically reversing the reference value matrix, and to the elements of the fourth quadrant after rotating the reference value matrix by 180 degrees, the coordinates of the other elements in the other quadrants, that is, 48 (=64-16) coordinate values, are not necessarily substituted and calculated. Accordingly, the amount of computation is greatly reduced.

If the location of an element in the DCT matrix is included in B of Figure 12, according to the B-type symmetry, the fifth reference value matrix addition unit 135 of Figure 13 adds the fifth reference value matrix, that is, the 16 values, stored in the fifth reference value matrix computation storage unit 105, to the elements of the first quadrant of the restoration matrix without change; to the elements of the second quadrant after horizontally reversing the reference value matrix and inverting the signs; to the elements of the third quadrant after vertically reversing the reference value matrix; and to the elements of the fourth quadrant after rotating the reference value matrix by 180 degrees and inverting the signs. For example, if the coordinates of a non-zero element in the DCT matrix are (i=2, j=1), the coordinates of the reference elements of the restoration matrix are (x=0, y=0), (x=0, y=1), (x=0, y=2), (x=0, y=3), (x=1, y=0), (x=1, y=1), (x=1, y=2), (x=1, y=3), (x=2, y=0), (x=2, y=1), (x=2, y=2), (x=2, y=3), (x=3, y=0), (x=3, y=1), (x=3, y=2), (x=3, y=3). Accordingly, the number of values resulting from DCT is 16 and the values are stored as a 4x4 matrix in the fifth reference value matrix computation storage unit 105, 145, as shown in the figure. If this matrix is added to the elements of the first quadrant without change, to the elements of the second quadrant after horizontally reversing the reference value matrix and inverting the signs, to the elements of the third quadrant after vertically reversing the reference value matrix, and to the elements of the fourth quadrant after rotating the reference value matrix by 180 degrees and inverting the signs, the coordinates of the other elements in the other quadrants, that is, 48 (=64-16) coordinate values, are not necessarily substituted and calculated. Accordingly, the amount of computation is greatly reduced.

If the location of an element in the DCT matrix is included in C of Figure 12, according to the C-type symmetry, the sixth reference value matrix addition unit 136 of Figure 13 adds the sixth reference value matrix, that is, the 16 values, stored in the sixth reference value matrix computation storage unit 106, 146, to the elements of the first quadrant of the restoration matrix without change; to the elements of the second quadrant after horizontally reversing the reference value matrix; to the elements of the third quadrant after vertically reversing the reference value matrix and inverting the signs; and to the elements of the fourth quadrant after rotating the reference value matrix by 180 degrees and inverting the signs. For example, if the coordinates of a non-zero element in the DCT matrix are (i=1, j=2), the coordinates of the reference elements of the restoration matrix are (x=0, y=0), (x=0, y=1), (x=0, y=2), (x=0, y=3), (x=1, y=0), (x=1, y=1), (x=1, y=2), (x=1, y=3), (x=2, y=0), (x=2, y=1), (x=2, y=2), (x=2, y=3), (x=3, y=0), (x=3, y=1), (x=3, y=2), (x=3, y=3). Accordingly, the number of values resulting from DCT is 16 and the values are stored as a 4x4 matrix in the sixth reference value matrix computation storage unit 106, 146, as shown in the figure. If this matrix is added to the elements of the first quadrant without change, to the elements of the second quadrant after horizontally reversing the reference value matrix, to the elements of the third quadrant after vertically reversing the reference value matrix and inverting the signs, and to the elements of the fourth quadrant after rotating the reference value matrix by 180 degrees and inverting the signs, the coordinates of the other elements in the other quadrants, that is, 48 (=64-16) coordinate values, are not necessarily substituted and calculated. Accordingly, the amount of computation is greatly reduced.

If the location of an element in the DCT matrix is included in D of Figure 12, according to the D-type symmetry, the seventh reference value matrix addition unit 137 of Figure 13 adds the seventh reference value matrix, that is, the 16 values, stored in the seventh reference value matrix computation storage unit 107, 147, to the elements of the first quadrant of the restoration matrix without change; to the elements of the second quadrant after horizontally reversing the reference value matrix and inverting the signs; to the elements of the third quadrant after vertically reversing the reference value matrix and inverting the signs; and to the elements of the fourth quadrant after rotating the reference value matrix by 180 degrees. For example, if the coordinates of a non-zero element in the DCT matrix are (i=1, j=1), the coordinates of the reference elements of the restoration matrix are (x=0, y=0), (x=0, y=1), (x=0, y=2), (x=0, y=3), (x=1, y=0), (x=1, y=1), (x=1, y=2), (x=1, y=3), (x=2, y=0), (x=2, y=1), (x=2, y=2), (x=2, y=3), (x=3, y=0), (x=3, y=1), (x=3, y=2), (x=3, y=3). Accordingly, the number of values resulting from DCT is 16 and the values are stored as a 4x4 matrix in the seventh reference value matrix computation storage unit 107, 147, as shown in the figure. If this matrix is added to the elements of the first quadrant without change, to the elements of the second quadrant after horizontally reversing the reference value matrix, to the elements of the third quadrant after vertically reversing the reference value matrix, and to the elements of the fourth quadrant after rotating the reference value matrix by 180 degrees, the coordinates of the other elements in the other quadrants, that is, 48 (=64-16) coordinate values, are not necessarily substituted and calculated. Accordingly, the amount of computation is greatly reduced.

Here, as shown in Figure 12, among the elements of the restoration matrix, which is the result of the IDCT transforming the DCT matrix, excluding the first row or the first column of the restoration matrix, the symmetry of the elements included in the even-numbered rows alternates between D-type symmetry and C-type symmetry (that is, D, C, D, C, ...), and the symmetry of the elements included in the odd-numbered rows alternate between B-type symmetry and A-type symmetry (that is, B, A, B, A, ...).

Figure 15 is a diagram used for explaining the entire process of DCT transforming respective elements.

Seven reference value computation storage units 151 through 157 substitute coordinate values of non-zero elements, and the coordinate values in the IDCT formula of reference elements, which are determined based on the symmetry of the IDCT formula among the elements of the restoration matrix, in IDCT, the values of non-zero elements that are found by the element search unit are substituted, and by doing so, obtain the reference values of respective elements of the restoration matrix for the non-zero elements, and store the obtained values.

According to the type of symmetry with respect to the coordinates of an element of the DCT matrix, the reference values, which are stored in the seven reference value computation storage units 151 through 157, are iteratively added to the values of respective elements of the restoration matrix such that the value of each element of the restoration matrix is calculated.

Figure 16 is a graph showing the result of experiments on the number of multiplications with respect to quantization parameters.

For the experiments, the present invention was implemented in C language and run on a P III 866 with a 512Mbytes memory. By inputting three representative video test files, that is, Akiyo, Foreman, and Mobile (Akiyo has the lowest precision, Mobile has the highest precision, and Foreman has the middle precision), the performance was measured. In each test file, each 200 frames of 4:2:0 format data were simulated by using MPEG4 simple profile CODEC (MS encoder V6.0). In the GOP structure, I:P = 1:30, the frame rate was 30 frame/sec. The numbers of multiplications and additions were adopted as the comparison criteria. The compared algorithm was Z.Wang 2D-DCT algorithm. In the compared Z.Wang DCT code, the size of quantization parameter Qp was adjusted in the DCT matrix, the number of multiplications was reduced by using a rotation technique, and by using rarity, the transform was performed such that, when necessary, only 1, 2, 4 coefficients were IDCT transformed.

Figure 16 shows the number of multiplications for Qp=5, 12, 20. Compared to the prior art fast algorithm, the present invention performed only essential computations according to the inputs, that is, the rarity of elements having effective values in the DCT matrix, and by doing so, showed excellent performance with a variety of complexities and picture qualities of the input pictures on average. In particular, when Qp was great, that is, when the transmission rate is low, the present invention showed a higher performance than the prior art fast algorithm. In addition, for moving pictures with higher complexity, that is, for high quality inputs of Mobile, the present invention reduced the number of multiplications by 35%.

Figure 17 is a graph showing the result of experiments on the number of additions with respect to quantization parameters.

Like the number of multiplications on average, the present invention also showed excellent performances with a variety of complexities and picture qualities of the input pictures on average. In particular, when Qp was great, that is, when the transmission rate was low, the present invention showed a higher performance than the prior art fast algorithm. In addition, for moving pictures with higher complexity, that is, for high quality inputs of Mobile, the present invention reduced the number of additions by 5%.

Figure 18 is a flowchart of the steps performed by a fast DCT method according to the present invention.

In all elements of the DCT matrix, non-zero elements are searched for in a predetermined order in step 181. The order follows a zigzag path starting from an element located at the first row and the first column of the DCT matrix. Then, non-zero elements are found and are 2D-IDCT transformed by using the symmetry of the IDCT formula, and by doing so the restored value of each element of the restoration matrix is calculated in step 182.

Figure 19 is a detailed flowchart of step 181 for 2D-DCT transforming each element in Figure 18. In the IDCT formula, in which the values of non-zero elements are found and are substituted, coordinate values of non-zero elements are substituted, and coordinate values of reference elements determined according to the symmetry of the IDCT formula among the elements of the restoration matrix are substituted, such that reference values of respective elements of the restoration matrix for the non-zero elements are obtained and stored in step 191. Then, the stored reference values are iteratively added to the values of respective elements of the restoration matrix according to the type of symmetry with respect to the coordinates of the reference elements, and by doing so, the restored value of each element of the restoration matrix is obtained in step 192.

Figure 20 is a detailed flowchart of step 191 for calculating and storing reference values in Figure 19.

If the coordinates of a non-zero element are the first row and first column, the coordinates of a reference element determined to be the element of the first row and first column are input in the IDCT formula such that the first reference value is calculated and stored in step 201. Next, if the coordinate values of a non-zero element are an arbitrary row and the first column, excluding the first row and first column, the coordinates of reference elements determined to be the elements of the arbitrary row and the first column are input in the IDCT formula such that the second reference value column is calculated and stored in step 202. Next, if the coordinate values of a non-zero element are the first row and an arbitrary column, excluding the first row and first column, the coordinates of reference elements determined to be the elements of the first row and the arbitrary column are input in the IDCT formula such that the third reference value row is calculated and stored in step 203. Next, if the coordinate values of a non-zero element are the coordinates of elements having A-type symmetry, the coordinate values of reference elements determined to be the elements of the first quadrant are input in the IDCT formula such that the fourth reference value matrix is calculated and stored in step 204. Next, if the coordinate values of a non-zero element are the coordinates of elements having B-type symmetry, the coordinate values of reference elements determined to be the elements of the first quadrant are input in the IDCT formula such that the fifth reference value matrix is calculated and stored in step 205. Next, if the coordinate values of a non-zero element are the coordinates of elements having C-type symmetry, the coordinate values of reference elements determined to be the elements of the first quadrant are input in the IDCT formula such that the sixth reference value matrix is calculated and stored in step 206. Next, if the coordinate values of a non-zero element are the coordinates of elements having D-type symmetry, the coordinate values of reference elements determined to be the elements of the first quadrant are input in the IDCT formula such that the seventh reference value matrix is calculated and stored in step 207.

Figure 21 is a detailed flowchart of the step 191 for iteratively adding reference values according to the type of symmetry.

The value of each element of the restoration matrix is initialized with the stored first reference value in step 211. Next, the stored second reference value column is added to the elements of each column of the restoration matrix in step 212. Next, the stored third reference value row is added to the elements of each row of the restoration matrix in step 213. Next, according to the A-type symmetry, the stored fourth reference value matrix is added to the elements of the first quadrant of the restoration matrix without change, added to the elements of the second quadrant after horizontally reversing the reference value matrix, added to the elements of the third quadrant after vertically reversing the reference value matrix, and added to the elements of the fourth quadrant after rotating the reference value matrix by 180 degrees in step 214. Next, according to the B-type symmetry, the stored fifth reference value matrix is added to the elements of the first quadrant of the restoration matrix without change, added to the elements of the second quadrant after horizontally reversing the reference value matrix and inverting the signs, added to the elements of the third quadrant after vertically reversing the reference value matrix, and added to the elements of the fourth quadrant after rotating the reference value matrix by 180 degrees and inverting the signs in step 215. Next, according to the C-type symmetry, the stored sixth reference value matrix is added to the elements of the first quadrant of the restoration matrix without change, added to the elements of the second quadrant after horizontally reversing the reference value matrix, added to the elements of the third quadrant after vertically reversing the reference value matrix and inverting the signs, and added to the elements of the fourth quadrant after rotating the reference value matrix by 180 degrees and inverting the signs in step 216. Next, according to the D-type symmetry, the stored seventh reference value matrix is added to the elements of the first quadrant of the restoration matrix without change, added to the elements of the second quadrant after horizontally reversing the reference value matrix and inverting the signs, added to the elements of the third quadrant after vertically reversing the reference value matrix and inverting the signs, and added to the elements of the fourth quadrant after rotating the reference value matrix by 180 degrees in step 217.

As shown in Figure 12, among the elements of the restoration matrix, which is the result of IDCT transforming the DCT matrix, excluding the first row or the first column of the restoration matrix, the symmetry of the elements included in the even-numbered rows alternates between D-type symmetry and C-type symmetry (that is, D, C, D, C, ...), and the symmetry of the elements included in the odd-numbered rows alternates between B-type symmetry and A-type symmetry (that is, B, A, B, A, ...).

The present invention may be embodied in a code, which can be read by a computer, on a computer readable recording medium. The computer readable recording medium includes all kinds of recording apparatuses on which computer readable data are stored.

The computer readable recording media includes storage media such as magnetic storage media (e.g.,

ROM's, floppy disks, hard disks, etc.), optically readable media (e.g., CD-ROMs, DVDs, etc.) and carrier waves (e.g., transmissions over the Internet).

Optimum embodiments have been explained above and are shown. However, the present invention is not limited to the exemplary embodiment described above, and it is apparent that variations and modifications by those skilled in the art can be effected within the spirit and scope of the present invention defined in the appended claims. Therefore, the scope of the present invention is not determined by the above description but by the accompanying claims.

According to the present invention, unnecessary computation for 0's, which constitute the majority of elements in a DCT matrix, can be reduced to the minimum in performing the IDCT transform. Since the probability is 90% or more that the number of elements having effective values in a DCT matrix is less than 10-15, the amount of computation of the present invention is greatly reduced compared to the prior art fast DCT algorithms. In addition, according to the present invention, even when the number of elements having effective values is big in a DCT matrix, the amount of computation is greatly reduced by using the symmetry of a DCT formula such that the method shows an excellent performance when statistically compared to the conventional fast DCT algorithms. Furthermore, by greatly reducing the amount of computation by the IDCT module, which corresponds to 25-30% of the total computation amount of a video decoder, a more stable and improved video decoder can be designed and decreasing power consumption enables the design of a smaller video decoder for mobile use.

In addition, while other fast DCT algorithms which perform calculations referring to an end of block (EOB) should use different methods depending on the scanning method, the present invention can be applied irrespective of the scanning methods, that is, regardless of a zigzag scan, a horizontal-direction-first scan, and a vertical-direction-first scan. Also, effective numbers are used to the maximum in the computation process. That is, since the number of roundings is just one, the peak-signal-to-noise ratio (PSNR) of the present invention is much superior to that of the prior art IDCT methods.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A fast inverse discrete transform method comprising:

   (a) searching all elements of a discrete cosine transform (DCT) matrix in a predetermined order for non-zero elements; and

   (b) calculating a restored value of each element of a restoration matrix, by 2 dimensional-inverse DCT (2D-IDCT) transforming the non-zero elements of the DCT matrix by using a symmetry of an IDCT formula.

2. The method of claim 1, wherein the predetermined order comprises an order following a zigzag path starting from an element located in a first row and a first column of the DCT matrix.

3. The method of claim 1 or 2, wherein the step (b) comprises:

   (b1) calculating and storing reference values of each non-zero element of the restoration matrix by inputting coordinate values of non-zero elements and coordinate values of reference elements determined according to the symmetry of the IDCT formula among the elements of the restoration matrix, in the IDCT formula, in which the coordinate values of non-zero elements are input; and

(b2) obtaining the restored value of each element of the restoration matrix, by adding iteratively the stored reference values to the values of respective elements of the restoration matrix according to a type of symmetry with respect to the coordinate values of the reference elements.

**4.** The method of claim 3, wherein the step (b1) comprises:

(b11) calculating and storing a first reference value, if coordinate values of a first non-zero element are the first row and the first column, by inputting coordinate values of a first reference element determined to be an element of the first row and the first column in the IDCT formula;

(b12) calculating and storing a second reference value column, if the coordinate values of the first non-zero element are an arbitrary row and the first column, excluding the first row and the first column, by inputting coordinate values of reference elements determined to be the elements of the arbitrary row and the first column in the IDCT formula; and

(b13) calculating and storing a third reference value row, if the coordinate values of the first non-zero element are the first row and an arbitrary column, excluding the first row and the first column, by inputting coordinate values of reference elements determined to be the elements of the first row and the arbitrary column in the IDCT formula.

**5.** The method of claim 4, wherein the step (b1) further comprises:

(b14) calculating and storing a fourth reference value matrix, if the coordinate values of the first non-zero element are coordinate values of elements having A-type symmetry, by inputting coordinate values of reference elements determined to be the elements of a first quadrant in the IDCT formula;

(b15) calculating and storing a fifth reference value matrix, if the coordinate values of the first non-zero element are coordinate values of elements having B-type symmetry, by inputting the coordinate values of reference elements determined to be the elements of the first quadrant in the IDCT formula;

(b16) calculating and storing a sixth reference value, if the coordinate values of the first non-zero element are coordinate values of elements having C-type symmetry, by inputting the coordinate values of reference elements determined to be the elements of the first quadrant in the IDCT formula; and

(b17) calculating and storing a seventh reference value, if the coordinate values of the first non-zero element are coordinate values of elements having D-type symmetry, by inputting the coordinate values of reference elements determined to be the elements of the first quadrant in the IDCT formula.

**6.** The method of claim 5, wherein the step (b2) comprises:

(b21) initializing the value of each element of the restoration matrix with the stored first reference value;

(b22) adding the stored second reference value column to the elements of each column of the restoration matrix; and

(b23) adding the stored third reference value row to the elements of each row of the restoration matrix.

**7.** The method of claim 6, wherein the step (b2) further comprises:

(b24) according to the A-type symmetry, adding the stored fourth reference value matrix to the elements of a first quadrant of the restoration matrix without change, adding to the elements of a second quadrant of the restoration matrix after horizontally reversing the reference value matrix, adding to the elements of a third quadrant of the restoration matrix after vertically reversing the reference value matrix, and adding to the elements of a fourth quadrant of the restoration matrix after rotating the reference value matrix by 180 degrees;

(b25) according to the B-type symmetry, adding the stored fifth reference value matrix to the elements of the first quadrant of the restoration matrix without change, adding to the elements of the second quadrant of the restoration matrix after horizontally reversing the reference value matrix and inverting the signs, adding to the elements of the third quadrant of the restoration matrix after vertically reversing the reference value matrix, and adding to the elements of the fourth quadrant of the restoration matrix after rotating the reference value matrix by 180 degrees and inverting the signs;

(b26) according to the C-type symmetry, adding the stored sixth reference value matrix to the elements of the first quadrant of the restoration matrix without change, adding to the elements of the second quadrant of the restoration matrix after horizontally reversing the reference value matrix, adding to the elements of the third quadrant of the restoration matrix after vertically reversing the reference value matrix and inverting the signs, and adding to the elements of the fourth quadrant of the restoration matrix after rotating the reference value matrix by 180 degrees and inverting the signs; and

(b27) according to the D-type symmetry, adding the stored seventh reference value matrix to the elements of the first quadrant of the restoration matrix without change, adding to the elements of the second quadrant of the restoration matrix after horizontally reversing the reference value matrix and inverting the signs, adding to the elements of the third quadrant of the restoration matrix after vertically reversing the reference value matrix and inverting the signs, and adding to the elements of the fourth quadrant of the restoration matrix after rotating the reference value matrix by 180 degrees.

**8.** The method of claim 7, wherein excluding the first row or the first column of the restoration matrix, the elements included in the even-numbered rows have the D-type symmetry and the C-type symmetry in turn continuously and repeatedly, and the elements included in the odd-numbered rows have the B-type symmetry and the A-type symmetry in turn continuously and repeatedly.

**9.** A fast inverse discrete cosine transform (IDCT) apparatus comprising:

an element search unit (61) which searches all elements of a discrete cosine transform (DCT) matrix in a predetermined order for non-zero elements; and

an individual element 2 dimensional (2D)-inverse DCT (IDCT) unit (62) which calculates a restored value of each element of a restoration matrix, by 2D-IDCT transforming the non-zero elements of the DCT matrix from the element search unit (61), by using a symmetry of an IDCT formula.

**10.** The apparatus of claim 9, wherein the predetermined order comprises an order following a zigzag path starting from an element located in a first row and a first column of the DCT matrix.

**11.** The apparatus of claim 9 or 10, wherein the individual element 2D-IDCT unit (62) comprises:

a reference value computation storage unit (621) which calculates and stores reference values of each non-zero element of the restoration matrix, by inputting coordinate values of the non-zero elements and coordinate values of reference elements determined according to the symmetry of the IDCT formula among the elements of the restoration matrix, in the IDCT formula, in which the coordinate values of the non-zero elements are searched for by the element search unit (61); and

a reference value iterative addition unit (622) which obtains the restored value of each element of the restoration matrix, by adding iteratively the reference values stored in the reference value computation and storage unit to the values of respective elements of the restoration matrix according to a type of symmetry with respect to the coordinate values of the reference elements.

**12.** The apparatus of claim 11, wherein the reference value computation storage unit (621) comprises:

a first reference value computation storage unit (101) which calculates and stores a first reference value if the coordinate values of a first non-zero element are the first row and the first column, by inputting the coordinate values of a reference element determined to be an element of the first row and the first column in the IDCT formula;

a second reference value column computation storage unit (102) which calculates and stores a second reference value column if the coordinate values of the first non-zero element are an arbitrary row and the first column, excluding the first row and first column, by inputting the coordinate values of reference elements determined to be the elements of the arbitrary row and the first column in the IDCT formula; and

a third reference value row computation storage unit (103) which calculates and stores a third reference value row if the coordinate values of the first non-zero element are the first row and an arbitrary column, excluding the first row and the first column, by inputting the coordinate values of reference elements determined to be the elements of the first row and the arbitrary column in the IDCT formula.

**13.** The apparatus of claim 12, wherein the reference value computation storage unit (621) further comprises:

a fourth reference value computation storage unit (104) which calculates and stores a fourth reference value matrix if the coordinate values of the first non-zero element are the coordinate values of elements having A-type symmetry, by inputting the coordinate values of reference elements determined to be the elements of a first quadrant in the IDCT formula;

a fifth reference value computation storage unit (105) which calculates and stores a fifth reference value matrix if the coordinate values of the first non-zero element are the coordinate values of elements having B-type symmetry, by inputting the coordinate values of reference elements determined to be the elements of the first quadrant in the IDCT formula;

a sixth reference value computation storage unit (106) which calculates and stores a sixth reference value matrix if the coordinate values of the first non-zero element are the coordinate values of elements having C-type symmetry, by inputting the coordinate values of reference elements determined to be the elements of the first quadrant in the IDCT formula; and

a seventh reference value computation storage unit (107) which calculates and stores a seventh reference value matrix if the coordinate values of the first non-zero element are the coordinate values of elements having D-type symmetry, by inputting the coordinate values of reference elements determined to be the elements of the first quadrant in the IDCT formula.

**14.** The apparatus of claim 13, wherein the reference value iterative addition unit (622) comprises:

a first reference value initialization unit (131) which initializes the value of each element of the restoration matrix with the first reference value stored in the first reference value computation storage unit (101);

a second reference value column addition unit (132) which adds the second reference value column stored in the second reference value column computation storage unit (102) to the elements of each column of the restoration matrix; and

a third reference value row addition unit (133) which adds the third reference value row stored in the third reference value row computation storage unit (103) to the elements of each row of the restoration matrix.

**15.** The apparatus of claim 14, wherein the reference value iterative addition unit (622) further comprises:

a fourth reference value matrix addition unit (134) which, according to the A-type symmetry, adds the fourth reference value matrix stored in the fourth reference value matrix computation storage unit to the elements of a first quadrant of the restoration matrix without change, to the elements of a second quadrant of the restoration matrix after horizontally reversing the reference value matrix, to the elements of a third quadrant of the restoration matrix after vertically reversing the reference value matrix, and to the elements of a fourth quadrant of the restoration matrix after rotating the reference value matrix by 180 degrees;

a fifth reference value matrix addition unit (135) which, according to the B-type symmetry, adds the fifth reference value matrix stored in the fifth reference value matrix computation storage unit to the elements of the first quadrant of the restoration matrix without change, to the elements of the second quadrant of the restoration matrix after horizontally reversing the reference value matrix and inverting the signs, to the elements of the third quadrant of the restoration matrix after vertically reversing the reference value matrix, and to the elements of the fourth quadrant of the restoration matrix after rotating the reference value matrix by 180 degrees and inverting the signs;

a sixth reference value matrix addition unit (136) which, according to the C-type symmetry, adds the sixth reference value matrix stored in the sixth reference value matrix computation storage unit to the elements of the first quadrant of the restoration matrix without change, to the elements of the second quadrant of the restoration matrix after horizontally reversing the reference value matrix, to the elements of the third quadrant of the restoration matrix after vertically reversing the reference value matrix and inverting the signs, and to the elements of the fourth quadrant of the restoration matrix after rotating the reference value matrix by 180 degrees and inverting the signs; and

a seventh reference value matrix addition unit (137) which, according to the D-type symmetry, adds the seventh reference value matrix stored in the seventh reference value matrix computation storage unit to the elements of the first quadrant of the restoration matrix without change, to the elements of the second quadrant of the restoration matrix after horizontally reversing the reference value matrix and inverting the signs, to the elements of the third quadrant of the restoration matrix after vertically reversing the reference value matrix and inverting the signs, and to the elements of the fourth quadrant of the restoration matrix after rotating the reference value matrix by 180 degrees.

**16.** The apparatus of claim 15, wherein excluding the first row or the first column of the restoration matrix, the elements included in the even-numbered rows have the D-type symmetry and the C-type symmetry in turn continuously and repeatedly, and the elements included in the odd-numbered rows have the B-type symmetry and the A-type symmetry in turn continuously and repeatedly.

**17.** A computer readable medium having embodied thereon a computer program for a fast IDCT method comprising:

(a) searching all elements of a DCT matrix in a predetermined order for non-zero elements; and

(b) calculating a restored value of each element of a restoration matrix, by 2D-IDCT transforming the non-zero elements of the DCT matrix by using the symmetry of an IDCT formula.

**18.** The computer readable medium of claim 17 having embodied thereon a computer program to perform the method of any of claims 1 to 8.

FIG. 1

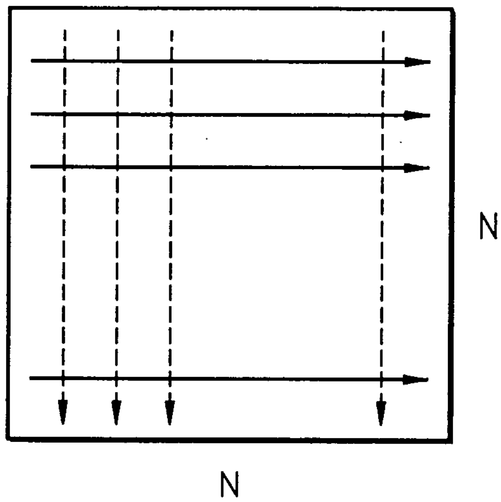


FIG. 2

| | NUMBER OF MULTIPLICATIONS | NUMBER OF ADDITIONS |
|---|---|---|
| Chen | 256 | 416 |
| Wang | 256 | 416 |
| Lee | 208 | 464 |
| AAN | 208 | 464 |

FIG. 3

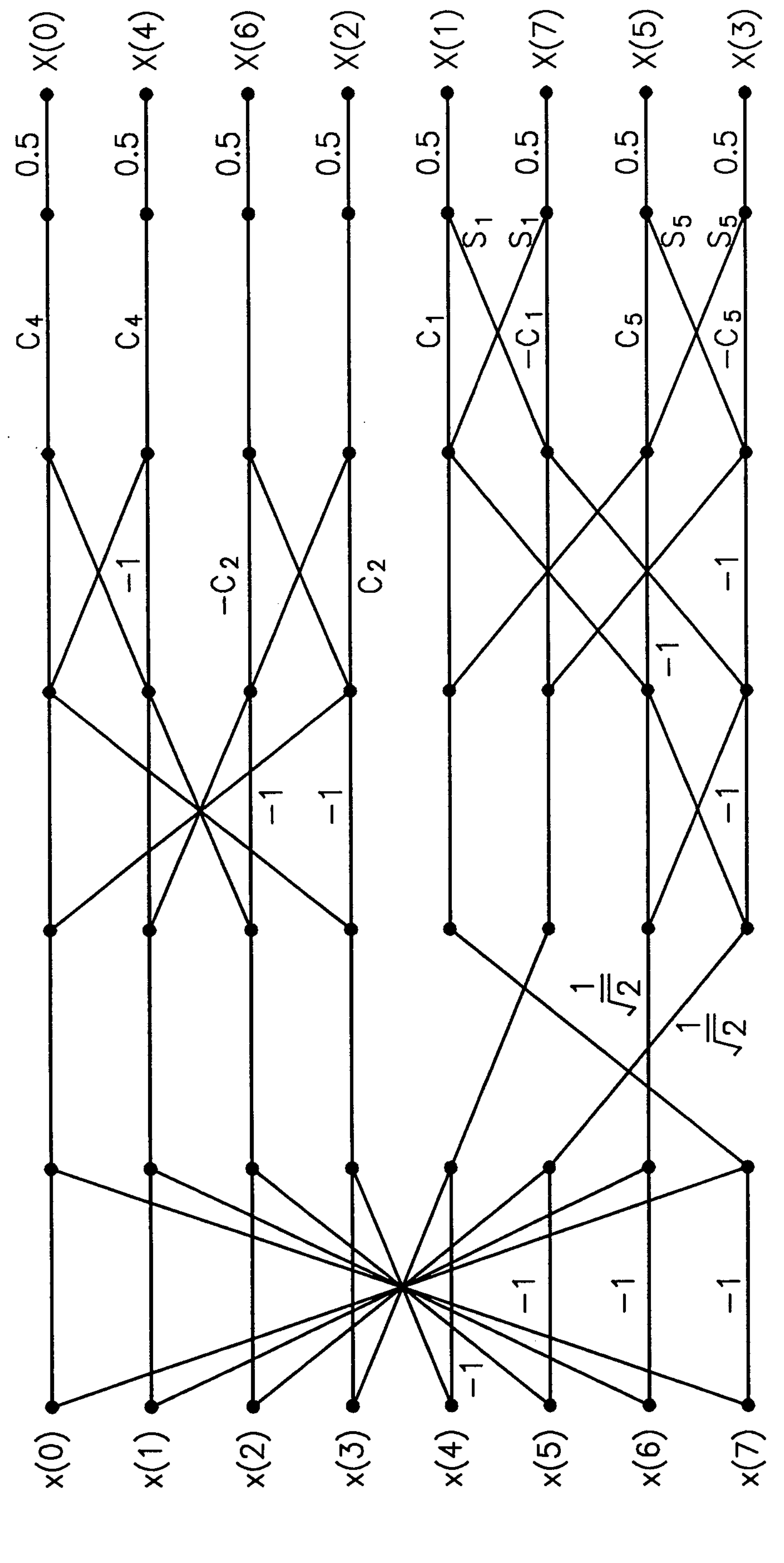
x(0)
x(1)
x(2)
x(3)
x(4)
x(5)
x(6)
x(7)
X(0)
X(4)
X(6)
X(2)
X(1)
X(7)
X(5)
X(3)
0.5
$C_4$
$C_1$
$-C_1$
$C_5$
$-C_5$
$S_1$
$S_5$
$-C_2$
$C_2$
−1
$\frac{1}{\sqrt{2}}$

# FIG. 4

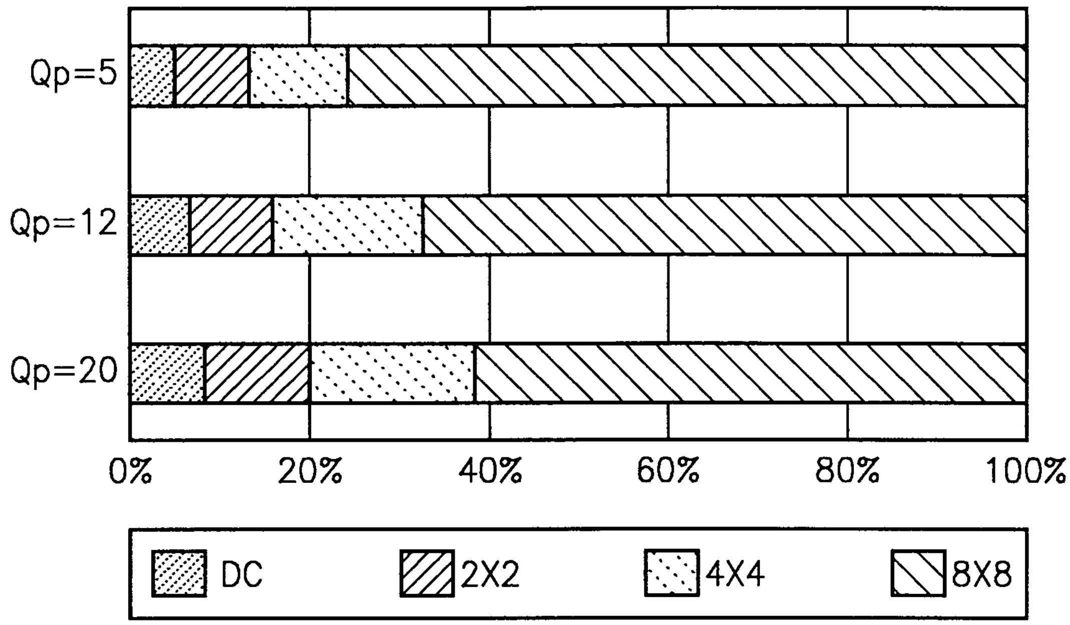
Qp=5
Qp=12
Qp=20
0%
20%
40%
60%
80%
100%
DC
2X2
4X4
8X8

# FIG. 5

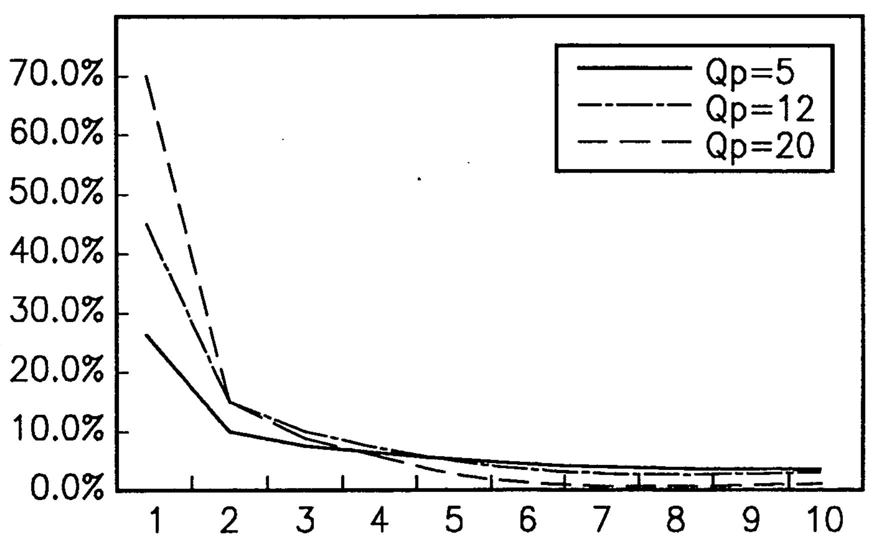
70.0%
60.0%
50.0%
40.0%
30.0%
20.0%
10.0%
0.0%
1
2
3
4
5
6
7
8
9
10
Qp=5
Qp=12
Qp=20

FIG. 6

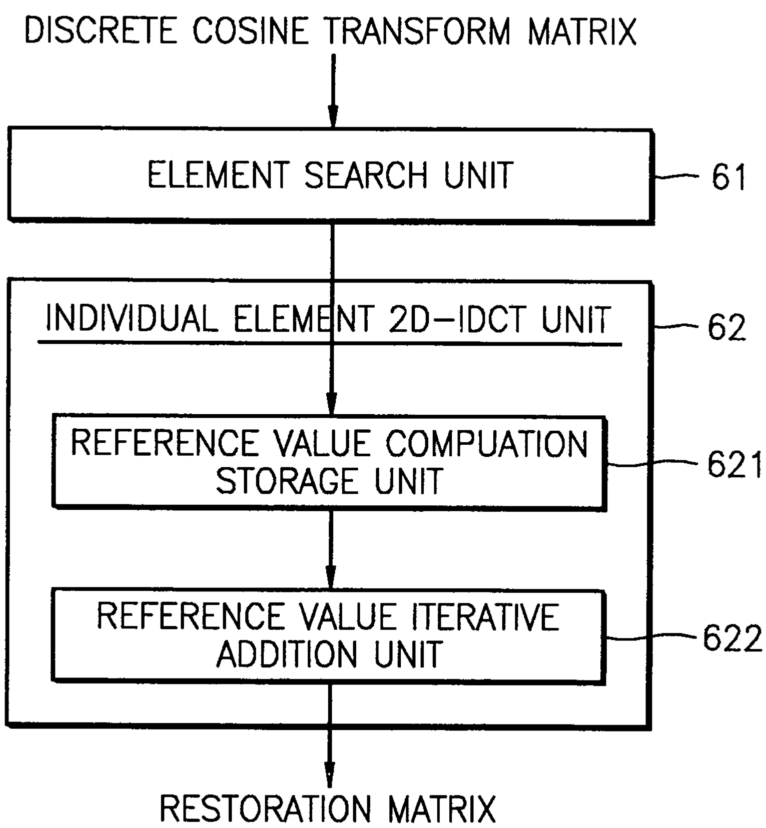
DISCRETE COSINE TRANSFORM MATRIX
ELEMENT SEARCH UNIT
61
INDIVIDUAL ELEMENT 2D-IDCT UNIT
62
REFERENCE VALUE COMPUATION STORAGE UNIT
621
REFERENCE VALUE ITERATIVE ADDITION UNIT
622
RESTORATION MATRIX

# FIG. 7

| | | | | | | | |
|---|---|---|---|---|---|---|---|
| A1 | A3 | A6 | A7 | A15 | 0 | 0 | 0 |
| A2 | A5 | A8 | A14 | 0 | 0 | 0 | 0 |
| A4 | A9 | A13 | 0 | 0 | 0 | 0 | 0 |
| A10 | A12 | 0 | 0 | 0 | 0 | 0 | 0 |
| A11 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

# FIG. 8

| m, n | 1 | 2 | | | | 3 | | 4 | | | | 5 | 6 | | | | 7 | | 8 | | | |
|---|---|---|---|---|---|---|---|---|---|---|---|---|---|---|---|---|---|---|---|---|---|---|
| sign | + | + | + | + | + | + | + | + | − | − | − | + | + | − | + | + | + | − | + | − | + | − |
| k, p | 4 | 1 | 3 | 5 | 7 | 2 | 6 | 3 | 7 | 1 | 5 | 4 | 5 | 1 | 7 | 3 | 6 | 2 | 7 | 5 | 3 | 1 |

FIG. 9

| | | | | | | | |
|---|---|---|---|---|---|---|---|
| 1 | 4 | 2 | 4 | 1 | 4 | 2 | 4 |
| 4 | 10 | 8 | 10 | 4 | 10 | 8 | 10 |
| 2 | 8 | 3 | 8 | 2 | 8 | 3 | 8 |
| 4 | 10 | 8 | 10 | 4 | 10 | 8 | 10 |
| 1 | 4 | 2 | 4 | 1 | 4 | 2 | 4 |
| 4 | 10 | 8 | 10 | 4 | 10 | 8 | 10 |
| 2 | 8 | 3 | 8 | 2 | 8 | 3 | 8 |
| 4 | 10 | 8 | 10 | 4 | 10 | 8 | 10 |

FIG. 10

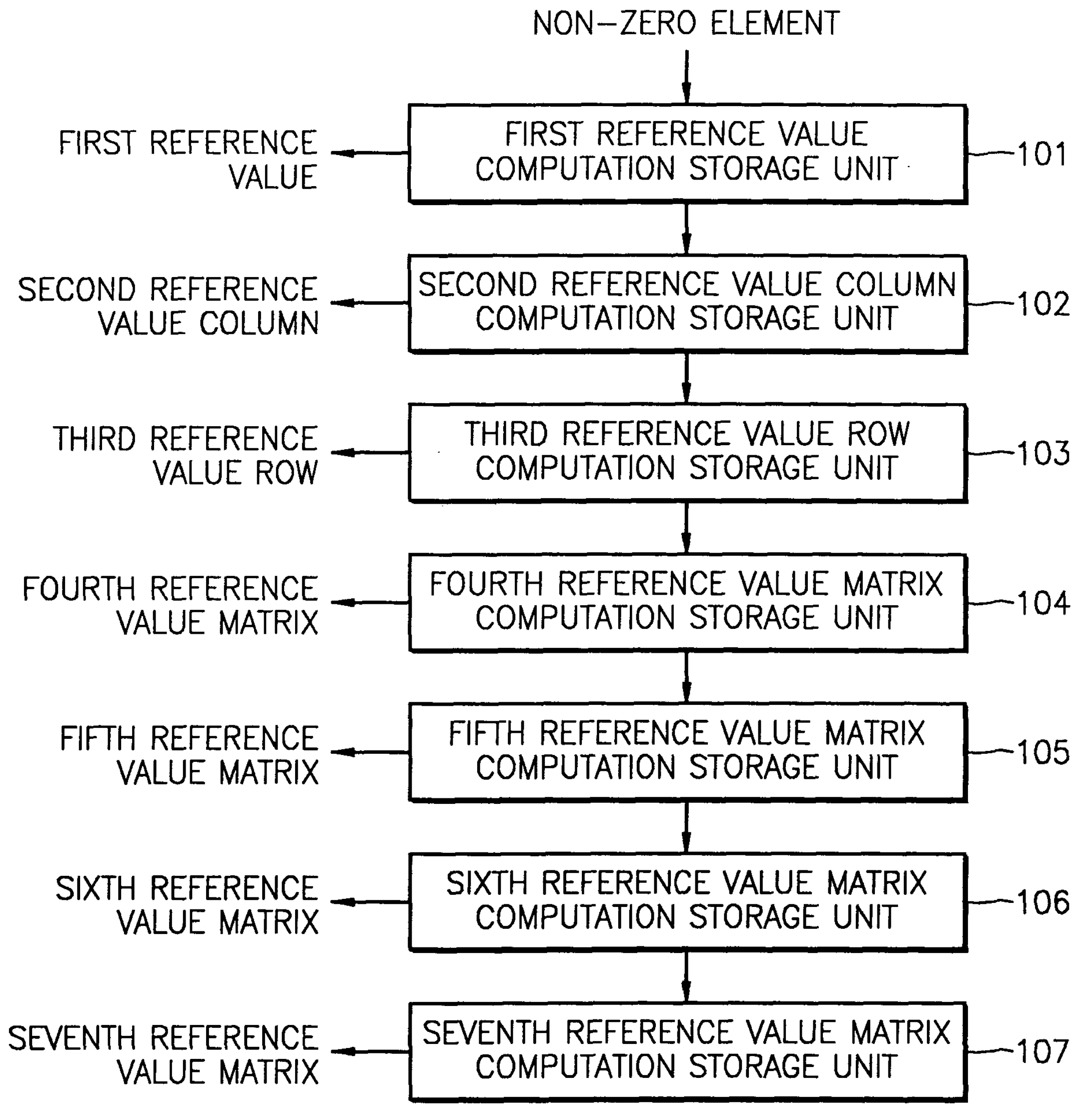

NON-ZERO ELEMENT
FIRST REFERENCE VALUE
FIRST REFERENCE VALUE COMPUTATION STORAGE UNIT
101
SECOND REFERENCE VALUE COLUMN
SECOND REFERENCE VALUE COLUMN COMPUTATION STORAGE UNIT
102
THIRD REFERENCE VALUE ROW
THIRD REFERENCE VALUE ROW COMPUTATION STORAGE UNIT
103
FOURTH REFERENCE VALUE MATRIX
FOURTH REFERENCE VALUE MATRIX COMPUTATION STORAGE UNIT
104
FIFTH REFERENCE VALUE MATRIX
FIFTH REFERENCE VALUE MATRIX COMPUTATION STORAGE UNIT
105
SIXTH REFERENCE VALUE MATRIX
SIXTH REFERENCE VALUE MATRIX COMPUTATION STORAGE UNIT
106
SEVENTH REFERENCE VALUE MATRIX
SEVENTH REFERENCE VALUE MATRIX COMPUTATION STORAGE UNIT
107

# FIG. 11

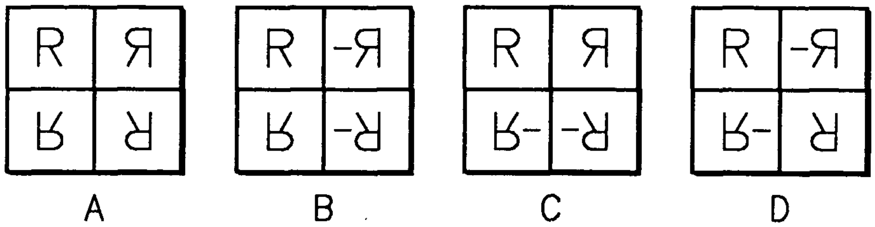


# FIG. 12

| DC | FIRST ROW | | | | | | |
|---|---|---|---|---|---|---|---|
| FIRST COLUMN | D | C | D | C | D | C | D |
| | B | A | B | A | B | A | B |
| | D | C | D | C | D | C | D |
| | B | A | B | A | B | A | B |
| | D | C | D | C | D | C | D |
| | B | A | B | A | B | A | B |
| | D | C | D | C | D | C | D |

FIG. 13

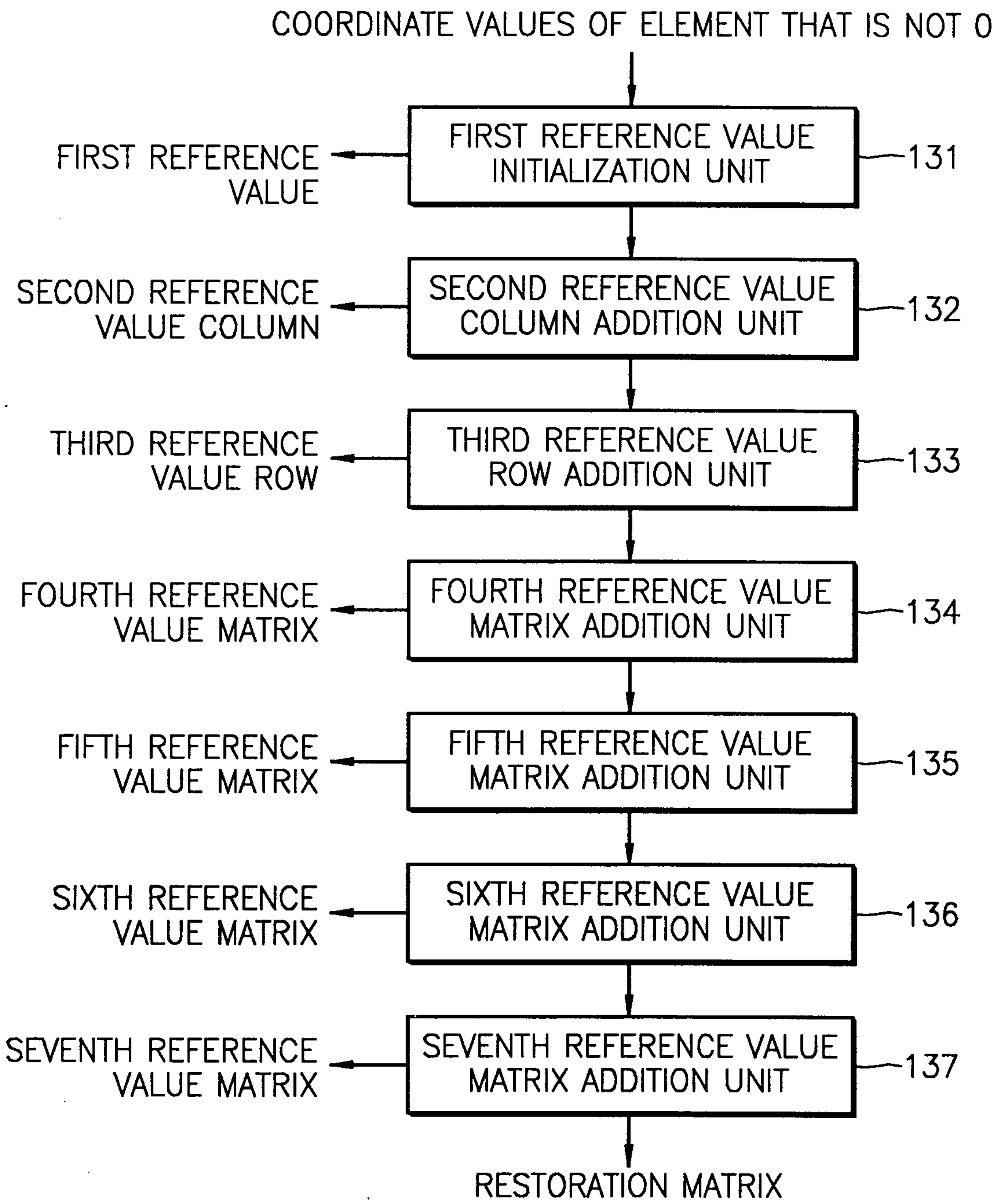
COORDINATE VALUES OF ELEMENT THAT IS NOT 0
FIRST REFERENCE VALUE
FIRST REFERENCE VALUE INITIALIZATION UNIT
131
SECOND REFERENCE VALUE COLUMN
SECOND REFERENCE VALUE COLUMN ADDITION UNIT
132
THIRD REFERENCE VALUE ROW
THIRD REFERENCE VALUE ROW ADDITION UNIT
133
FOURTH REFERENCE VALUE MATRIX
FOURTH REFERENCE VALUE MATRIX ADDITION UNIT
134
FIFTH REFERENCE VALUE MATRIX
FIFTH REFERENCE VALUE MATRIX ADDITION UNIT
135
SIXTH REFERENCE VALUE MATRIX
SIXTH REFERENCE VALUE MATRIX ADDITION UNIT
136
SEVENTH REFERENCE VALUE MATRIX
SEVENTH REFERENCE VALUE MATRIX ADDITION UNIT
137
RESTORATION MATRIX

FIG. 14

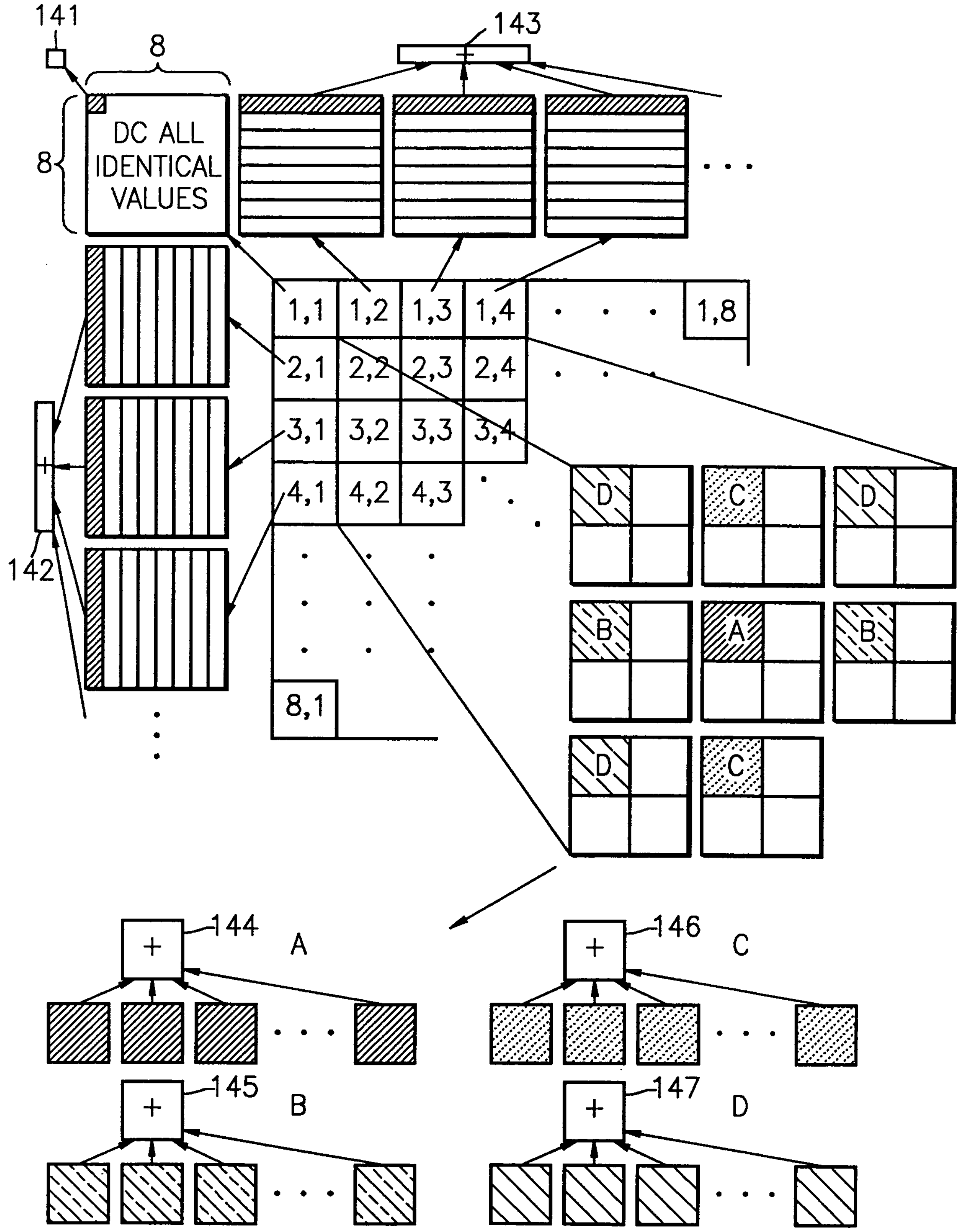

141
8
143
8
DC ALL
IDENTICAL
VALUES
142
1,1
1,2
1,3
1,4
1,8
2,1
2,2
2,3
2,4
3,1
3,2
3,3
3,4
4,1
4,2
4,3
8,1
D
C
D
B
A
B
D
C
144
A
146
C
145
B
147
D

FIG. 15

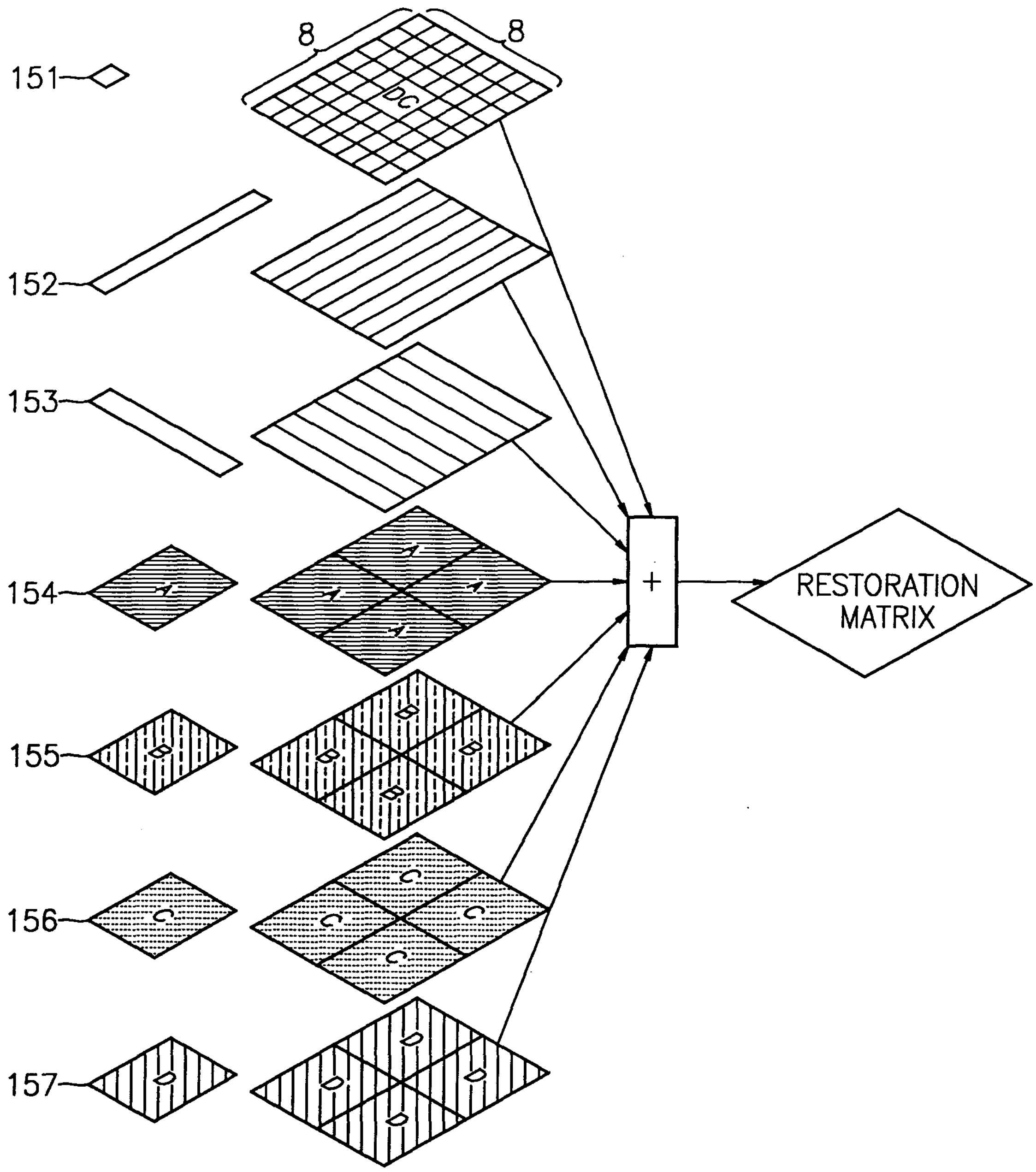

FIG. 16

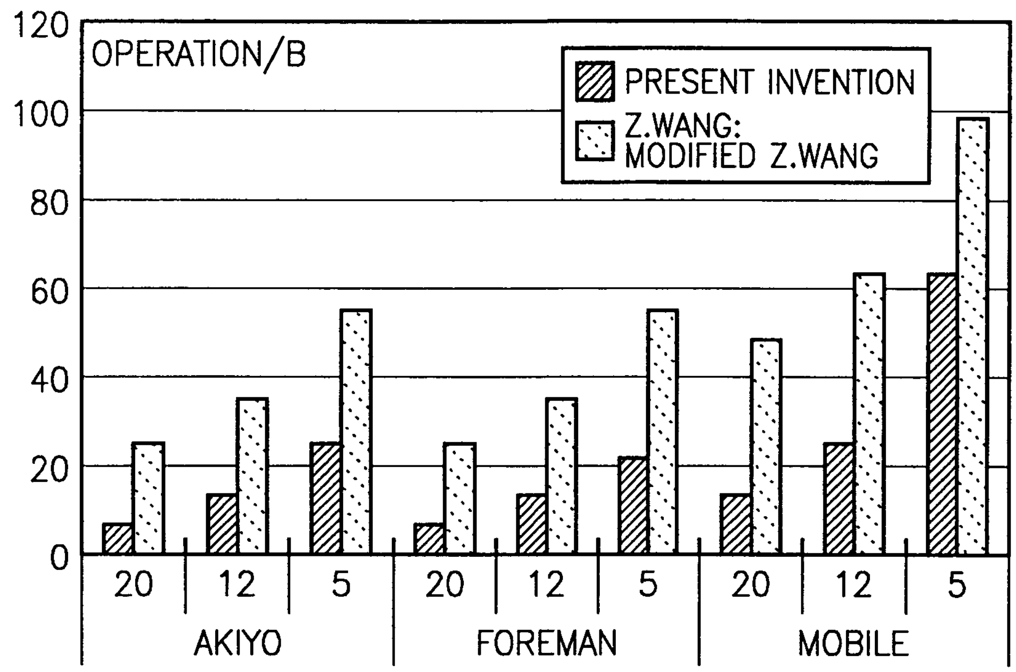
OPERATION/B
PRESENT INVENTION
Z.WANG:
MODIFIED Z.WANG
120
100
80
60
40
20
0
20
12
5
20
12
5
20
12
5
AKIYO
FOREMAN
MOBILE

FIG. 17

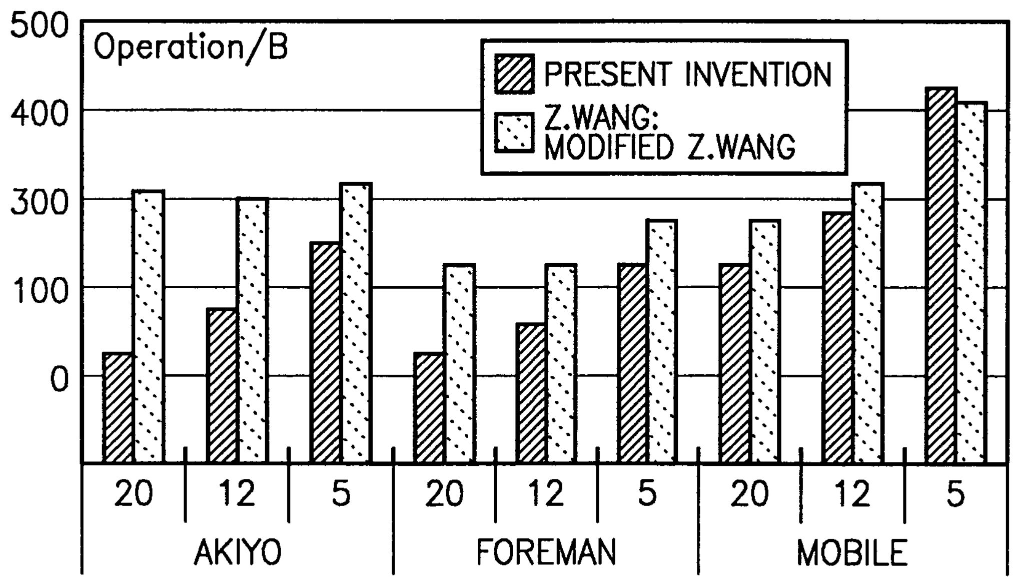
Operation/B
PRESENT INVENTION
Z.WANG:
MODIFIED Z.WANG
500
400
300
100
0
20
12
5
20
12
5
20
12
5
AKIYO
FOREMAN
MOBILE

FIG. 18

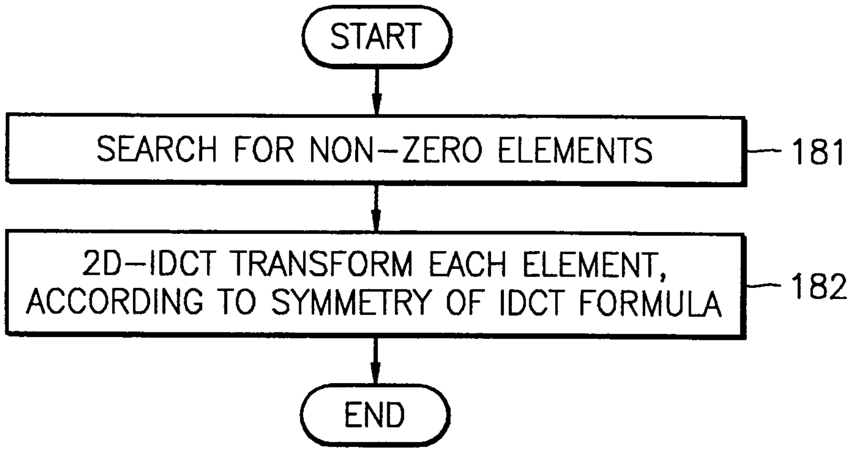
START
SEARCH FOR NON-ZERO ELEMENTS
181
2D-IDCT TRANSFORM EACH ELEMENT, ACCORDING TO SYMMETRY OF IDCT FORMULA
182
END

FIG. 19

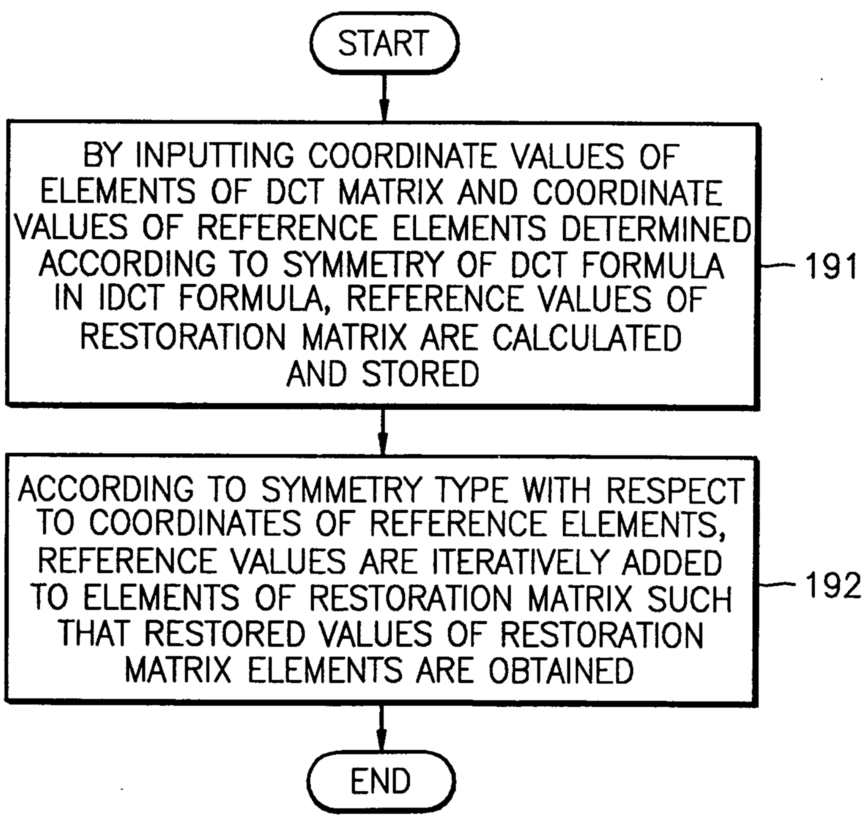
START
BY INPUTTING COORDINATE VALUES OF ELEMENTS OF DCT MATRIX AND COORDINATE VALUES OF REFERENCE ELEMENTS DETERMINED ACCORDING TO SYMMETRY OF DCT FORMULA IN IDCT FORMULA, REFERENCE VALUES OF RESTORATION MATRIX ARE CALCULATED AND STORED
191
ACCORDING TO SYMMETRY TYPE WITH RESPECT TO COORDINATES OF REFERENCE ELEMENTS, REFERENCE VALUES ARE ITERATIVELY ADDED TO ELEMENTS OF RESTORATION MATRIX SUCH THAT RESTORED VALUES OF RESTORATION MATRIX ELEMENTS ARE OBTAINED
192
END

FIG. 20

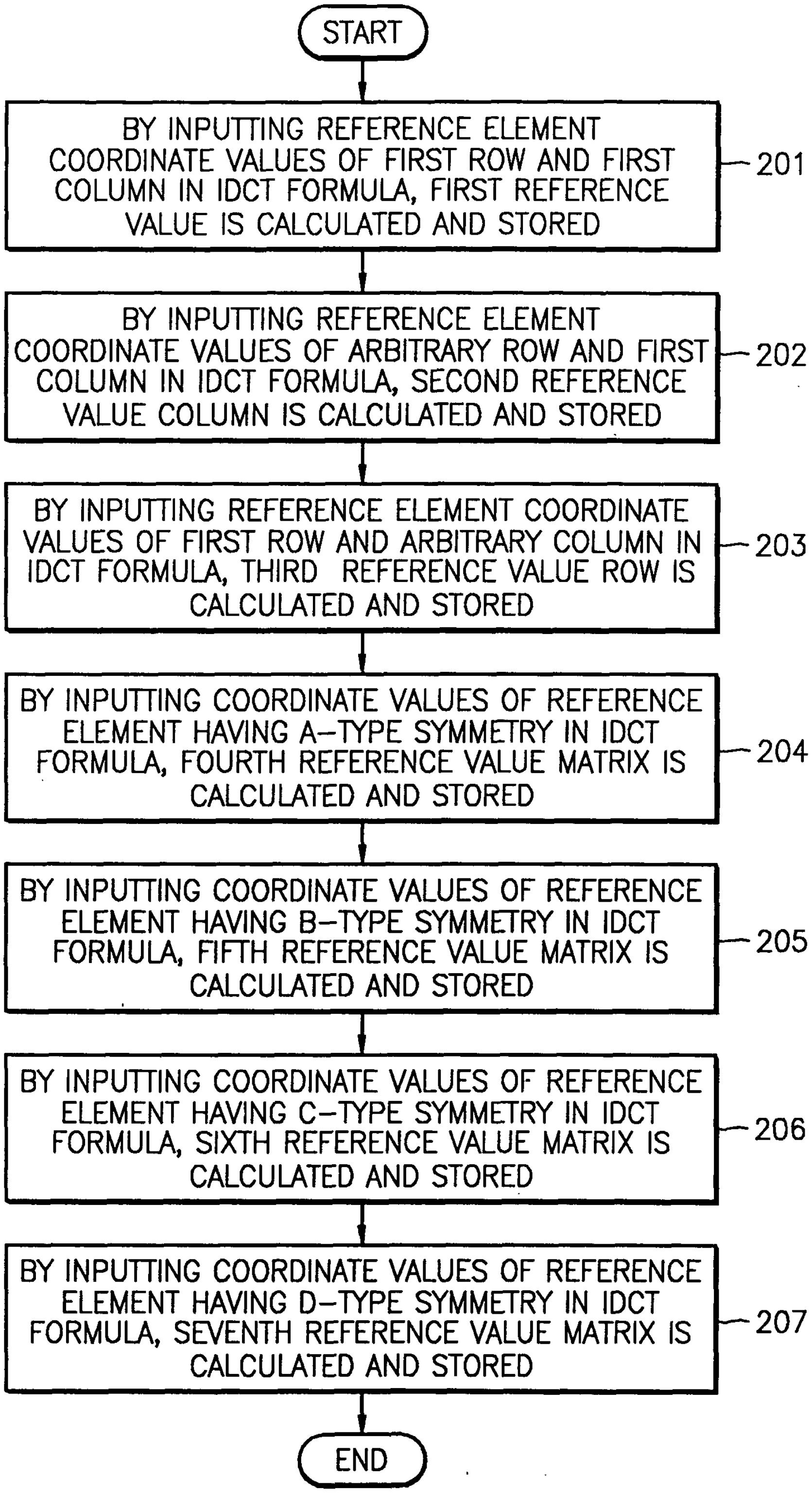
START
BY INPUTTING REFERENCE ELEMENT COORDINATE VALUES OF FIRST ROW AND FIRST COLUMN IN IDCT FORMULA, FIRST REFERENCE VALUE IS CALCULATED AND STORED
201
BY INPUTTING REFERENCE ELEMENT COORDINATE VALUES OF ARBITRARY ROW AND FIRST COLUMN IN IDCT FORMULA, SECOND REFERENCE VALUE COLUMN IS CALCULATED AND STORED
202
BY INPUTTING REFERENCE ELEMENT COORDINATE VALUES OF FIRST ROW AND ARBITRARY COLUMN IN IDCT FORMULA, THIRD REFERENCE VALUE ROW IS CALCULATED AND STORED
203
BY INPUTTING COORDINATE VALUES OF REFERENCE ELEMENT HAVING A-TYPE SYMMETRY IN IDCT FORMULA, FOURTH REFERENCE VALUE MATRIX IS CALCULATED AND STORED
204
BY INPUTTING COORDINATE VALUES OF REFERENCE ELEMENT HAVING B-TYPE SYMMETRY IN IDCT FORMULA, FIFTH REFERENCE VALUE MATRIX IS CALCULATED AND STORED
205
BY INPUTTING COORDINATE VALUES OF REFERENCE ELEMENT HAVING C-TYPE SYMMETRY IN IDCT FORMULA, SIXTH REFERENCE VALUE MATRIX IS CALCULATED AND STORED
206
BY INPUTTING COORDINATE VALUES OF REFERENCE ELEMENT HAVING D-TYPE SYMMETRY IN IDCT FORMULA, SEVENTH REFERENCE VALUE MATRIX IS CALCULATED AND STORED
207
END

FIG. 21

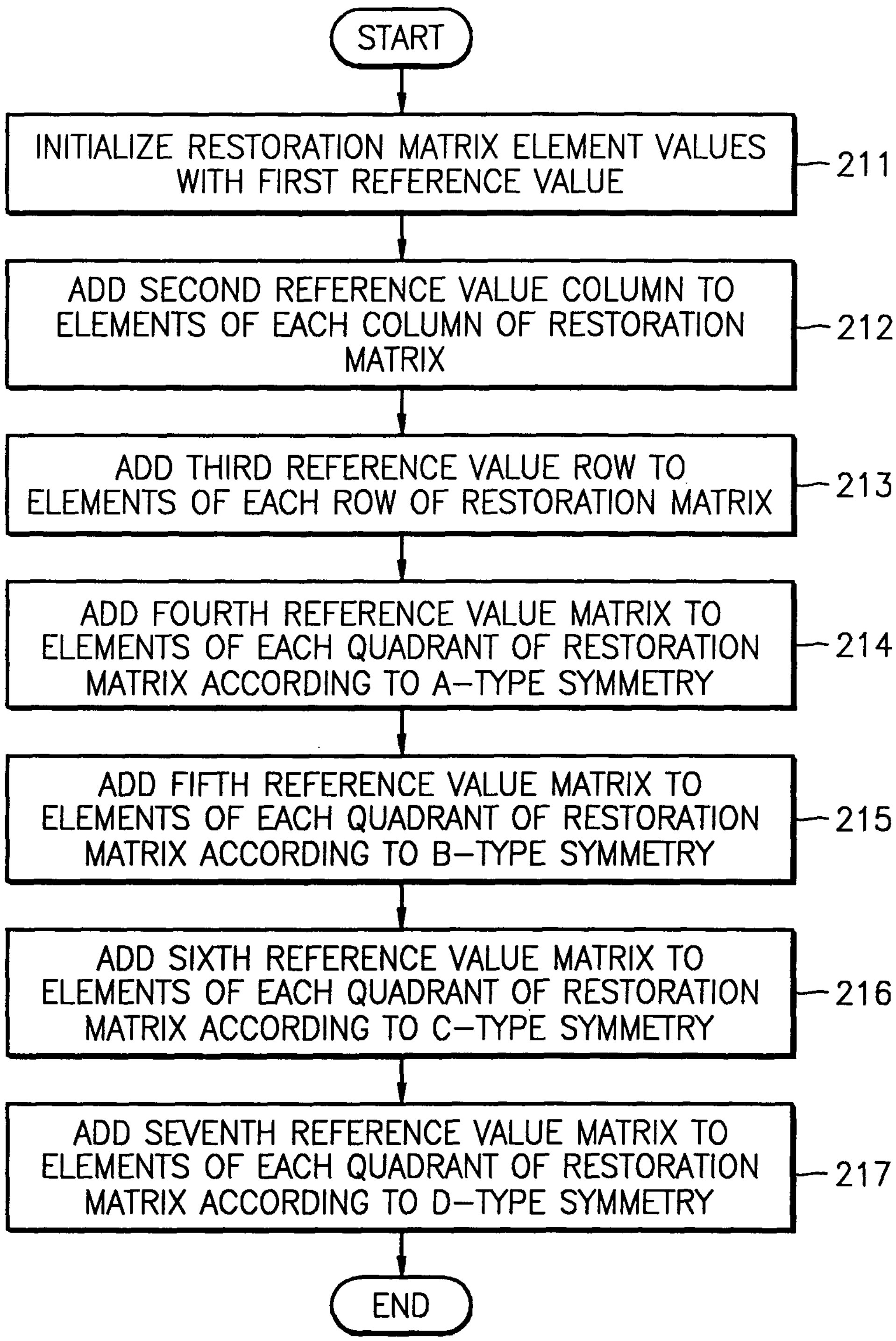
START
INITIALIZE RESTORATION MATRIX ELEMENT VALUES WITH FIRST REFERENCE VALUE
211
ADD SECOND REFERENCE VALUE COLUMN TO ELEMENTS OF EACH COLUMN OF RESTORATION MATRIX
212
ADD THIRD REFERENCE VALUE ROW TO ELEMENTS OF EACH ROW OF RESTORATION MATRIX
213
ADD FOURTH REFERENCE VALUE MATRIX TO ELEMENTS OF EACH QUADRANT OF RESTORATION MATRIX ACCORDING TO A-TYPE SYMMETRY
214
ADD FIFTH REFERENCE VALUE MATRIX TO ELEMENTS OF EACH QUADRANT OF RESTORATION MATRIX ACCORDING TO B-TYPE SYMMETRY
215
ADD SIXTH REFERENCE VALUE MATRIX TO ELEMENTS OF EACH QUADRANT OF RESTORATION MATRIX ACCORDING TO C-TYPE SYMMETRY
216
ADD SEVENTH REFERENCE VALUE MATRIX TO ELEMENTS OF EACH QUADRANT OF RESTORATION MATRIX ACCORDING TO D-TYPE SYMMETRY
217
END